(19) Europäisches Patentamt
European Patent Office
Office européen des brevets

(11) EP 3 924 666 B1

# (12) EUROPEAN PATENT SPECIFICATION

(45) Date of publication and mention of the grant of the patent:
**28.01.2026 Bulletin 2026/05**

(21) Application number: **20705692.0**

(22) Date of filing: **14.02.2020**

(51) International Patent Classification (IPC):
***F23C 9/00*** *(2006.01)* ***F23R 3/28*** *(2006.01)*

(52) Cooperative Patent Classification (CPC):
**F23C 9/00; B01D 53/08; B01D 53/12; C01B 3/16; C01B 3/38;** C01B 2203/0233; C01B 2203/0425; F23C 2900/9901; F23J 2215/50; F23J 2219/60; F23R 2900/00002; Y02E 20/16; Y02E 20/18

(86) International application number:
**PCT/EP2020/053968**

(87) International publication number:
**WO 2020/165440 (20.08.2020 Gazette 2020/34)**

## (54) METHOD OF GENERATING GAS TURBINE FUEL AND GAS TURBINE SYSTEM

VERFAHREN ZUR ERZEUGUNG VON GASTURBINENBRENNSTOFF UND GASTURBINENSYSTEM

PROCÉDÉ DE GÉNÉRATION DE CARBURANT DE TURBINE À GAZ ET SYSTÈME DE TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 GB 201902131**

(43) Date of publication of application:
**22.12.2021 Bulletin 2021/51**

(73) Proprietor: **Amtech AS**
**5006 Bergen (NO)**

(72) Inventors:
- **STRAND, Asbjørn**
  **5004 Bergen (NO)**
- **ROUT, Kumar Ranjan**
  **7069 Trondheim (NO)**
- **CHEN, De**
  **7048 Trondheim (NO)**

(74) Representative: **J A Kemp LLP**
**80 Turnmill Street**
**London EC1M 5QU (GB)**

(56) References cited:
**EP-A1- 2 957 835**
**EP-A2- 0 686 813**
**DE-A1- 102009 043 499**
**US-A1- 2008 155 984**
**US-A1- 2016 017 762**
**US-A1- 2017 074 163**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Field

The field of the invention is the provision of a fuel, that comprises hydrogen, for use in a combustor of a gas turbine. Embodiments also comprise a new reactor design for the generation of the fuel.

### Background

Fossil fuels provide a significant portion of the world's energy needs. A problem with fossil fuel combustion is that it is a major source of anthropogenic carbon dioxide ($CO_2$) emissions.

A known technology for reducing $CO_2$ emissions into the atmosphere is carbon capture and storage (CCS). The three main options for capturing $CO_2$ from fossil fuel plants are post-combustion, pre-combustion, and oxy-combustion. An important advantage of post-combustion technologies is that the technology can be retro-fitted to existing power plants.

In a CCS system, a sorbent removes $CO_2$ from a carbonaceous gas. The CCS system also comprises a sorbent regenerator in which the sorbent releases $CO_2$ into a controlled environment so that the $CO_2$ is not released into the atmosphere. The regenerated sorbent is then re-used to remove $CO_2$ from gas. The sorbent is therefore moved around the CCS system in a loop.

The sorbent used for post combustion $CO_2$ capture can either be any of a number of commercially available aqueous amine solvents or a sorbent based adsorption technology. An advantage of absorption processes that use amine solvents is the fast kinetics in the absorption reactor. However, disadvantages include high capital and operating costs. The use of amine solvents can also cause environmental problems. The use of solid sorbents for CCS has a number of technical and economic advantages over the use of amine solvents. An example of a solid sorbent for CCS is calcium oxide (CaO).

For realisation of a solid sorbent based CCS system, a gas-solid reactor is required for supporting the reaction between a solid sorbent and carbonaceous gas, e.g. a flue gas from a fossil fuel power plant. Three types of beds are typically used in gas-solid reactors. These are fixed beds, fluidized beds, and moving beds.

When reactors with fixed beds are used in a system that is operated continuously, the reactors require complicated operation and control procedures in which the bed is alternatively saturated and regenerated in a cyclical manner. Another problem with fixed bed reactors, in the specific application of CCS applied to flue gas from fossil fuel fired plant with a CaO sorbent, is that the volume of flue gas is three orders of magnitude larger than the optimum volume flow of solid particles. Due to limitations on gas velocity to prevent the bed from fluidizing, a large number of fixed beds are needed and this greatly increases the capital cost.

A fluidised bed of a reactor is a bubbling and circulating bed in which solids and gas are well mixed. The mixing ensures good heat and mass transfer characteristics. The fluidized bed reactor is an effective mixing device for solid particles due to the large flows inside the reactor. However, a problem with fluidised bed reactors is that the retention time of individual solid particles has a very wide probability distribution. Some particles can stay in the reactor for seconds, whereas other particles may stay in the reactor for minutes. When the optimum retention time for the reaction is in the order of a few minutes, a significant proportion of the solids will be in the reactor for too short a time for the reaction to be effectively completed, and another significant proportion will still be in the reactor long after reaction is completed. This reduces the efficiency of fluidized bed reactors and reduces their economic viability. Another problem with the use of fluidized bed reactors is that there can be significant attrition of sorbent particles and erosion of the reactor vessel and internal components.

In known designs of moving bed reactor, solid particles are contained in a vertically oriented reactor chamber. Solid particles are continuously fed into the top of the reactor and taken out from the bottom of the reactor in a controlled manner. By the act of gravity, the solid bed inside the reactor moves from the top of the reactor to the bottom of the reactor as a plug. This secures a specific retention time of solid particle passing through the reactor. The solid particles are fairly densely packed in the moving bed, leaving a relatively small volume for the gas phase. Gaseous reactants can pass through the reactor in a co-flow, counter flow or cross flow manner. Known designs of moving bed reactor are problematic when the gas has a relatively low concentration of reactants such that there is a large proportion of inert gas inside the reactor that needs to be transported through the solid bed. This creates large pressure drops in the gas phase, and in the case of counter flowing gas, the gas may quickly start to fluidize the solid bed so that the system does not possess the characteristics of a moving bed reactor.

Hydrogen has a number of important uses, often termed the 'hydrogen economy'. In particular, hydrogen may be used as a directly combusted fuel. Advantageously, hydrogen is a clean fuel because the only product of the combustion is water.

It is known to use reforming processes to generate hydrogen. Reforming processes react methane with steam to generate hydrogen and carbon dioxide. The hydrogen can then be separated from the gas mixture by using a membrane or other techniques.

There is a general need to provide an improved reactor system for use in large scale CCS applications and for hydrogen production by reforming. There is also a general need to improve the provision of hydrogen as a fuel.

DE 10 2009 043499 A1 discloses background information.

US 2008/155984 A1 discloses a method of generating fuel used in the combustor of a gas turbine. The method comprises: generating a reformate using heat from a total combustor, wherein the reformate comprises hydrogen. A fuel is then generated as a gas mixture of reformate and a second fuel..

## Summary of invention

The invention is set out in the independent claims.

Preferable embodiments are set out in the dependent claims.

## List of figures

Figure 1 is a cross-section through a reactor design according to an example;

Figure 2 is a cross-section through a reactor design according to an example;

Figure 3 is a cross-section through a reactor design according to an example;

Figure 4 is a cross-section through a reactor design according to an example;

Figure 5 is a cross-section through a reactor design according to an example;

Figure 6 is a cross-section through a reactor design according to an example;

Figure 7A is a cross-section through a reactor design according to an example;

Figure 7B is a top down view of a reactor design according to an example;

Figure 7C is a cross-section through a reactor design according to an example;

Figure 7D is a cross-section through a moving bed of a reactor design according to an example;

Figure 7E is a cross-section through part of a flow control mechanism according to an example;

Figure 7F is a cross-section through a loop valve of a reactor design according to an example;

Figure 8 is a system according to an example;

Figure 9 is a system showing first and second reactor designs according to an example;

Figure 10 is a system showing first and second reactor designs according to an example;

Figures 11A, 11B, 11C and 11D show flow control mechanisms that may be used to control the flow through the first and/or second reactor designs according to examples;

Figure 12 is a system according to an example;

Figure 13 is a system according to an example;

Figure 14 is a system according to an example;

Figure 15 is a system according to an example;

Figure 16 is a system according to an example;

Figure 17 is a system according to an example;

Figure 18 shows a known implementation of a gas turbine; and

Figure 19 is a flow diagram of a technique according to an embodiment.

**Description of examples**

There are a number of problems with using hydrogen as a combusted fuel in a gas turbine. Hydrogen is highly reactive and this causes high temperatures. One of the problems experienced by the various attempts to combust hydrogen in air is that the high temperatures cause high NOx concentrations and this is a strictly regulated pollutant. The high combustion velocity also prevents the use of advanced dry low NOx burner technology.

A way of using hydrogen as fuel is to use syngas fired gas turbines in IGCC plants. Hydrogen is one of the major fuel constituents of syngas. However, a problem with this approach is that it requires additional processes for the generation of the syngas and large amounts of carbon monoxide may be generated.

An attempt to solve the problems experienced by pure hydrogen has been to dilute the hydrogen. Nitrogen and steam are both potential diluent candidates. Although steam is demonstrated to be more effective than nitrogen, the latter is preferred because steam significantly affects the heat transfer properties of the hot exhaust gas flow and reduces the use life components in a system. However, the use of nitrogen requires the cost and complication of providing an air separation unit for generating the nitrogen, i.e. depleting oxygen from air.

There is a need to improve on known technologies for use of hydrogen in a gas turbine. In particular, there is a need provide an efficient hydrogen driven gas turbine in dependence on a supply of natural gas.

The inventors have found a way of improving the use of hydrogen as a combusted fuel in a gas turbine. The fuel used in the gas turbine is a gas mixture that comprises hydrogen as well as substantially inert gasses, such as nitrogen and carbon dioxide.

The inventors have also developed a particularly advantageous system for generating hydrogen by reforming processes and realised that the hydrogen generated by such a system may be used as the hydrogen that is combusted in a gas turbine. Hydrogen production may therefore integrated with the use of the hydrogen in a gas turbine.

Presented first below is a description of a number of examples of new reactor designs of the inventors.

Embodiment are then described in which hydrogen generated by a reactor is used to supply the fuel for a gas turbine.

According to a first example, there is provided a first reactor for supporting a reaction between a sorbent and a gas.

According to a second example, there is provided a second reactor for supporting a reaction in which a sorbent is regenerated.

According to a third example, there is provided a system comprising the reactors of the first and second examples.

According to a fourth example, there is provided another system comprising the reactors of the first and second examples.

According to a fifth example, there is provided a system for supporting a sorption enhanced reforming process, and optionally a sorption enhanced water gas shift process, in addition to a gas capture process.

A preferred application of examples is in a CCS system for large scale CCS applications. The CCS system preferably uses metal oxide particles/pellets, such as calcium oxide (CaO) particles/pellets, as a sorbent. The sorbent preferably continuously moves around the CCS system in a loop with the sorbent being used to capture a gas and then being regenerated with each loop of the system.

In the application of $CO_2$ capture from flue gas from a natural gas fired combined cycle power plant (NGCC), the concentration of reactant is less than 4%vol. A typical 400 MW class NGCC produces nearly 2000 $m^3$/s exhaust from the gas turbine. To capture the $CO_2$ by carbonate looping in a moving bed reactor requires a flow of approximately 400 kg/s of CaO particles. Effective CaO particles would need to be in the form of substantially spherical pellets of diameter 1 mm to 3 mm having a bulk density of about 1000 kg/$m^3$. This results in a volume flow of circulating solids of 0.4 $m^3$/s. An acceptable utilization of the CaO pellets requires a retention time in the reactor of approximately 3 minutes. That implies a bulk volume of the solid pellets bed of 72 $m^3$. It is clearly not possible to pass 2000 $m^3$/s exhaust gas through a known design of moving bed of such volume without causing extreme pressure drops or fluidization of the bed.

For a coal fired power plant, the $CO_2$ concentration in the gas may be 12-14%vol. Flue gases from industrial process like a blast furnace for steel production or a cement kiln can have concentrations of $CO_2$ above 20%. However, the inert gas volume left after the $CO_2$ has reacted with the solids has practically the same volume. Known moving bed reactor designs therefore experience similar problems to those described above.

Examples solve the above problems by providing new designs of reactors for supporting gas-solid reactions and the release of gas from a solid in a CCS system. Each reactor comprises a plurality of moving beds for transporting solid sorbent through the reactor. Each reactor also comprises a plurality of gas ducts for gas flows through the reactor. The gas flows are controlled such that gas is forced to flow across one or more moving beds a plurality of times.

A particularly preferred application of a reactor according to an example is supporting the reaction between a solid sorbent and a carbonaceous gas in a CCS system. The sorbent is preferably CaO particles in the form of substantially spherical pellets/particles with a 1 mm to 3 mm diameter and a bulk density of up to 3000 kg/$m^3$, preferably the bulk density is in the range 1000 to 1500kg/$m^3$.

Examples also include other applications for reactors, such as reactors for gas reforming and/or the removal of $CO_2$ from a mixture of $H_2$ and $CO_2$.

A first example is described in more detail below.

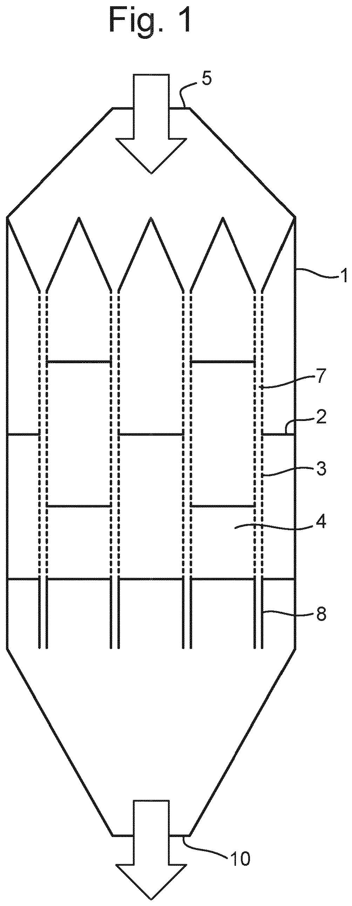

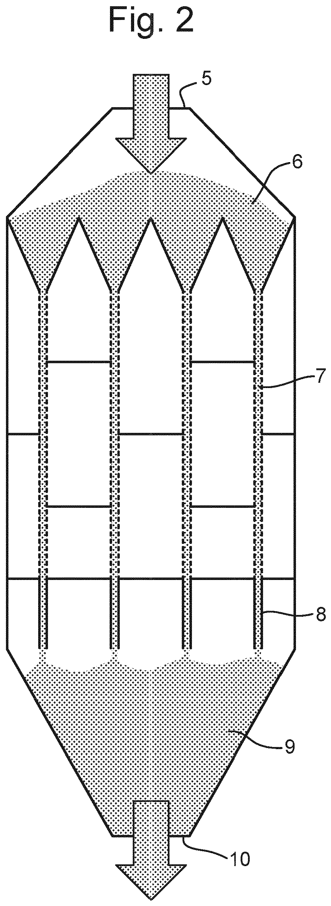

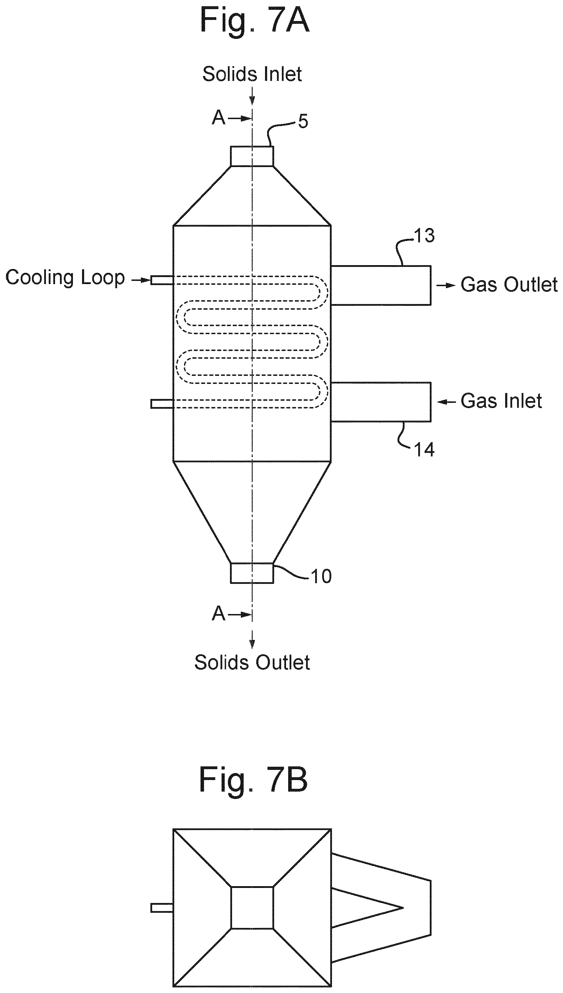

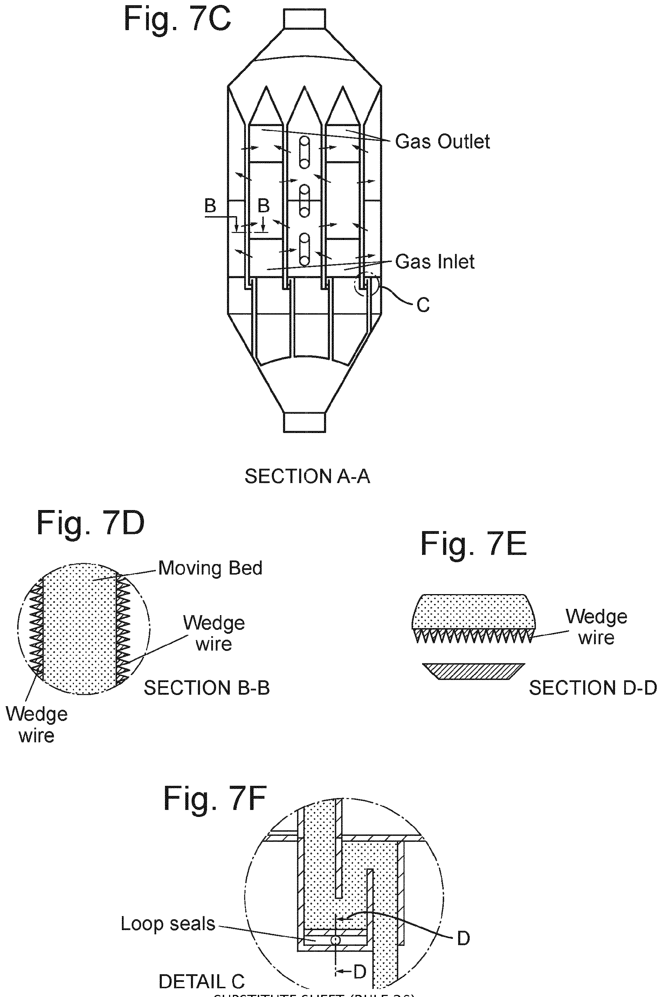

Figures 1 to 6, 7A and 7C show cross-sections through a first reactor according to a first example. Figure 7B is a top down view of the first reactor. As shown in Figures 1 to 6, 7A and 7C, at the top of the first reactor is an inlet 5 through which sorbent enters the first reactor. At the bottom of the first reactor is an outlet 10 through which the sorbent exits the first reactor. Between the inlet 5 and the outlet 10 is a main body of the first reactor.

The main body of the first reactor has outer walls 1. At the top of the main body of the first reactor is an upper bed 6. Provided below the upper bed 6 are a plurality of moving beds 7 that extend vertically downwards through the main body of the first reactor to a lower bed 9 at the bottom of the first reactor. The main body of the first reactor also comprises a gas inlet 14, through which gas enters the first reactor, and a gas outlet 13, through which gas exits the first reactor. Between the vertically arranged moving beds 7, as well as the outer walls 1 of the main body, are gas ducts for gas flows through chambers in the main body.

The walls of the moving beds 7 comprise strainer plates 3. The strainer plates 3 have the property of retaining the solid sorbent within each moving bed 7 but gas is able to pass through the strainer plates 3. A possible design of the strainer plate 3 may be types wedge wire screens, such as those manufactured by Intamesh, see http://www.intamesh.co.uk/ as viewed on 13th December 2017. It is known to use such screens as strainers and filters in other industries than the field of examples, such as in shale shakers for mud and cuttings separation during the drilling of oil and gas wells. Figure 7D is a cross-section through a moving bed 7 with wedge wire screens as walls according to an example.

In order to minimise the friction and stress on the particles of sorbent, the strainer plates 3 are preferably orientated vertically. That is to say, the gap between the plates is linear and orientated so that it is parallel to the flow of sorbent through the first reactor. For the same reason, when the strainer plate 3 is a wedge wire screen, the flat side of the wedge should provide the inner surface of the outer wall of the moving beds 7, as shown in Figure 7D. The wedge should have the property that the openings in the wedge are not so large that particles of the sorbent can pass through the openings, but the openings should be large enough to allow gas to pass through them. The diameter of the sorbent particles/pellets may be about 1mm to 3mm and so an appropriate opening distance in the wedge wire screen may be between 0.2mm to 0.8mm, preferably 0.5mm. The width of the flat side of the wedge that provides the inner surface of the outer wall of the moving beds 7, as shown in Figure 7D, may be 1.5mm.

The first reactor is designed so that it can be used with any size of sorbent. The openings in the wedge are always designed to be smaller than the diameter of all, or substantially all, the particles of the sorbent so the particles cannot pass through the openings. For example, if the particles of the sorbent have a diameter of 0.5mm the openings in the wedge may be reduced to 0.3mm.

Alternatively, the strainer plates 3 may be provided by perforated plates, or a thick rigid perforated plate with fairly large diameter perforation (approx. 10 mm) cladded with a thin sheet with very small perforation (<1 mm). In some applications these may be sufficient for retaining particles of solid sorbent in the moving beds 7 and less expensive than wedge wire screens.

The gas ducts comprise horizontally arranged baffle plates 2 and gas is unable to flow directly through a baffle plate 2. Preferably there is at least one baffle plate 2 in each gas duct 4. The provision of one or more baffle plates 2 in each vertically aligned gas duct divides each gas duct into a plurality of separate and vertically aligned chambers.

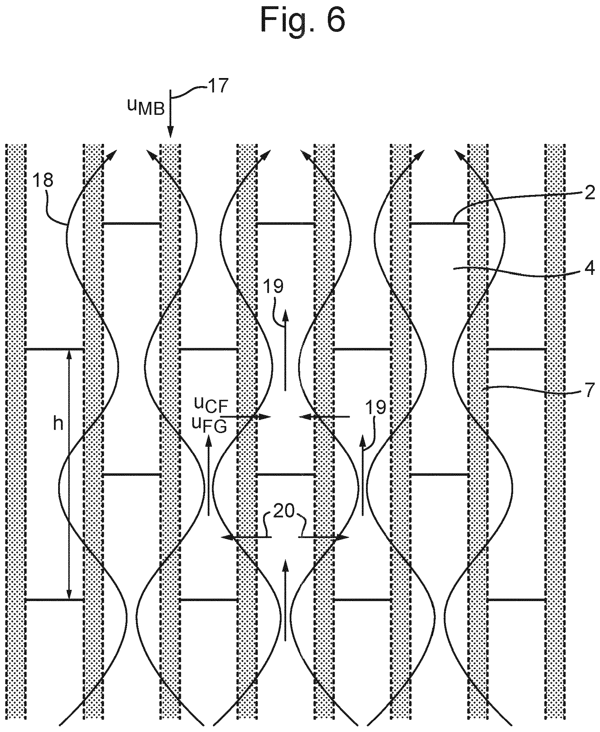

As shown in Figure 6, when a gas flow in a gas duct 4 reaches a baffle plate 2, the gas is forced by the baffle plate 2 to flow out of its current chamber in the gas duct, through a strainer plate 3 and into a moving bed 7. The gas then flows across the moving bed 7 and into a chamber of a different gas duct. In order for it to be possible for gas to flow from a chamber in a first gas duct 4 to an adjacent chamber in the same first gas duct, via a chamber in a second gas duct, the vertical position of baffle plates 2 in adjacent gas ducts is preferably staggered as shown in Figure 6. That is to say, in any two adjacent gas ducts 4, all of the baffle pates 2 have different vertical positions. As shown in Figure 6, a gas path through the first reactor may comprise flowing across the same moving bed 7 plurality of times. Clearly, a gas flow path through the first reactor may additionally, or alternatively, comprise flowing across a plurality of different moving beds 7.

The gas flow paths from the gas inlet 14 to the gas outlet 13 therefore comprise gas flows through a plurality of chambers, with the gas flowing through one of the moving beds 7 whenever it flows between two chambers.

Preferably, the main body of the first reactor is substantially a rectangular cuboid. Each of the moving beds 7, gas ducts and chambers in each gas duct are also substantially rectangular cuboids. Two walls of each moving bed 7 are provided by strainer plates 3, two further walls of each moving bed 7 are provided by parts of the outer wall 1 of the main body and the moving beds 7 are open at each end in order for sorbent to enter and exit the moving bed 7. Each gas duct is also cuboid and is either formed between two moving beds 7 or between a moving bed 7 and the outer wall 1 of the main body. The baffle plates 2 in the gas ducts are also thin rectangular cuboids. Advantageously, the components of the main body of the first reactor all have a rectangular cuboid construction and can therefore be easily made. The construction of the first reactor is also easier when rectangular cuboid components are used.

Although the main body of the first reactor is preferably rectangular cuboid, examples also include the first reactor being cylindrical, as well as other shapes.

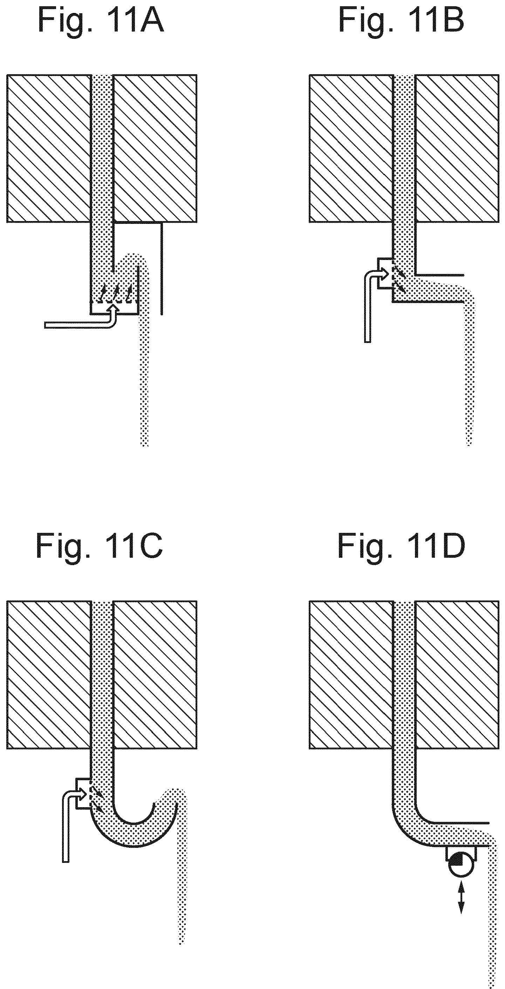

According to a preferred example, the rate at which sorbent passes through the moving beds 7 can be controlled. At the lower end of each of the moving beds 7 is an exit duct 8. Each of the exit ducts 8 comprises a flow control mechanism. The flow control mechanism may comprise, for example, one or more loop seals, as shown in Figure 7F, and/or one or more adjustable baffles, as shown in Figure 7E, and allows the rate at which the sorbent moves into the lower bed 9 to be controlled. Preferably, some of the gas is fed into a gas inlet of the loop seal. This generates an up-flow of gas that reduces that rate at which sorbent particles move through the moving beds. The flow control mechanism through the first reactor may also be as described later with reference to Figures 11A to 11D.

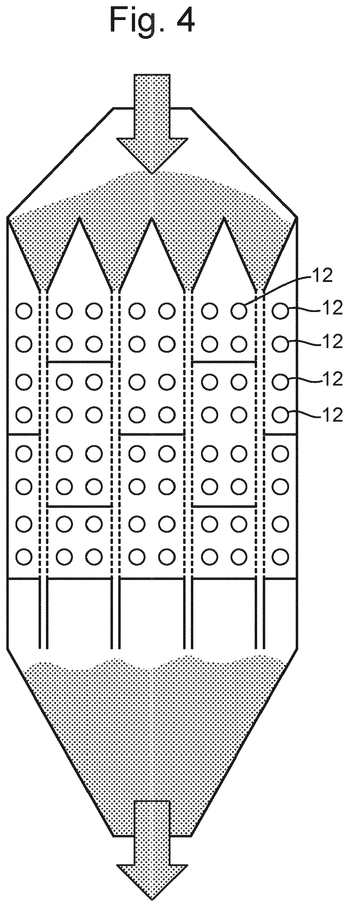

The reaction between a carbonaceous gas and CaO is an exothermic reaction. It is therefore necessary to remove heat from the first reactor in order to maintain the conditions of the reaction between the gas and the sorbent within a desired temperature range over a long period of use, or continuous use, of the first reactor. In order to remove heat for the first reactor, the first reactor preferably comprises one or more cooling tubes 12. As shown in Figures 4, 5, 7A and 7C, a cooling tube 2 has an inlet 15 into the first reactor and outlet 16 from the first reactor. The cooling tube 2 is arranged to pass the through one or more of the gas ducts. Examples include there being one or more cooling tubes 12 for each chamber of a gas duct, one or more cooling tubes 12 for each gas duct or one or more cooling tubes 12 for all of the gas ducts. The cooling tubes are arranged to directly cool the gas in order to remove heat from the system. Since the cooling tubes 12 do not pass through the moving beds 7 they do not impede the movement of the sorbent in the moving beds 7. Within each cooling tube is a circulated coolant in a heat exchanger arrangement according to known techniques. The coolant may be, for example, one of the noble elements (such as Helium), sodium or any other suitable working fluid.

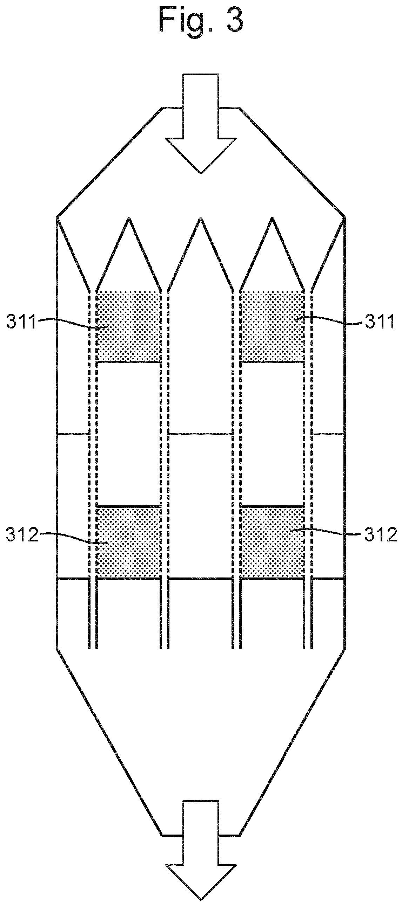

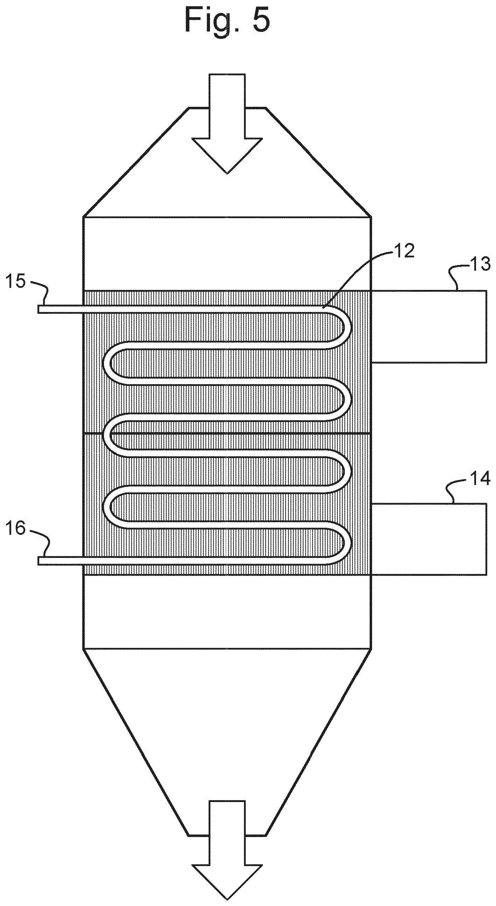

Figures 3 and 5 show gas inlet ports 312 and gas outlet ports 311 for providing a gas flow into the gas ducts 4 of the first reactor. There is a first manifold between the gas inlet ports 312 and the gas inlet 14, and a second manifold between the gas outlet ports 311 and the gas outlet 13. In the shown configuration with the gas inlet 14 below the gas outlet 13, the relative flows of the gas and sorbent through the first reactor comprise a counter flow component in addition to the cross-flow component. However, examples also include the gas inlet 14 being above the gas outlet 13 and the relative flows of the gas and sorbent through the first reactor comprising a co-flow component in addition to the cross-flow component.

As shown in Figure 3, the first and second manifold are preferably arranged to connect to every second gas duct. Examples also include manifolds being connected to both sides of the first reactor, such that every gas duct is connected to manifolds for gas supply and extraction. This is particularly appropriate when the gas flows are large as it reduces the gas flow velocity into and out of the first reactor.

Examples include there being any number of baffles 2 in each gas duct. For example, the number of baffles 2 in a gas duct may be between one and ten. The superficial cross flow velocity of gas through the first reactor depends on the vertical spacing of the baffles 2 in gas duct and so the number and spacing of the baffles 2 is preferably designed so that an appropriate cross-flow velocity is achieved for the expected operating conditions of the first reactor.

In use, solid particles/pellets of sorbent are fed into the inlet 5 at the top of the first reactor. A carbonaceous gas, such as a flue gas, is fed into the gas inlet 14. The sorbent moves through the upper bed 6 and is split so that it travels into the plurality of parallel moving beds 7. The baffle plates 2 in the gas ducts 4 force the gas to make a plurality of flows through one or more the moving beds 7. In each moving bed 7, the relative flow between the solid and the gas has both a cross-flow component, due to the gas moving across the moving bed 7, and a vertical component, which is either a counter-flow or co-flow relative to that of the sorbent.

An advantage of the first reactor design according to examples is that the contact between the gas and sorbent is very effective. The gas is forced to make a plurality of crossings of one or more moving beds 7 as the gas flows from the gas inlet to the gas outlet. This is clearly shown in Figure 6 in which there is a cross-flow and counter-flow of gas and sorbent. The first reactor has approximate properties to those of a counter flow moving bed reactor in which the solids are distributed over a very large area and there is a low bed thickness. The narrow thickness of the bed allows the gas cross-flow velocity to be low and the gas pressure drop is consequently also low.

Another advantage of the first reactor according to examples is that the volume of the gas ducts is a lot larger than that of the moving beds 7. For example, the width of each of the gas ducts may be in the range of 10cm to 100 cm, whereas the width of each moving bed 7 may be in the range 1cm to 10 cm. Even when the volume ratio of the gas and solid is greater than a thousand, the first reactor can be easily designed to accommodate gas flow velocities in the preferred range of 10m/s to 20 m/s, and sorbent velocities in the moving beds 7 that are in the range 1cm/s to 10 cm/s.

The first reactor according to examples has the combined advantages of a fluidized bed reactor's large gas flow capacity and a moving bed reactor's specific retention time of a solid sorbent. The mechanical stress on sorbent particles/pellets is also low due to the low velocity of the sorbent through the moving beds 7.

Figure 6 shows gas flow paths 18 between adjacent gas ducts 4 via a moving bed 7. The average vertical gas flow velocity, $U_{FG}$, is 19. The superficial cross-flow velocity of the gas, $U_{CF}$, is 20. The moving bed velocity, $U_{MB}$, is 17.

The cooling requirements of the cooling tubes are explained further below.

The specific surface area of randomly packed spheres of diameter 2mm is900 $m^2/m^3$. The total bulk volume of the solid sorbent pellets in a first reactor, for a CaO looping CCS system for flue gas from a 400 MW class NGCC, is 72 $m^3$. The results in a total heat surface area between solid sorbent and flue gas of 64800 $m^2$. For a flue gas passing such a bed at a superficial velocity of approximately 1 m/s, the heat exchange coefficient will be in the order of 500 $W/m^2K$. The required heat removal in such a system in order to keep the temperature of the solid sorbent constant is 150 MW. This implies a temperature difference between gas and solid sorbent of:

$$\Delta T = \frac{150\ MW}{500\ W\ m^{-2}K^{-1} \cdot 64{,}800\ m^2} = 4.6K$$

For a flow velocity of gas in the ducts of 10-20 m/s, the heat exchange coefficients are 75-150 $W/m^2K$. This is for forced convection over typical tube bundles with tube diameter, D, being 20mm - 50 mm. The specific area of a 20 mm diameter tube in a rectangular array with pitch of 2xD is 40 $m^2$. Examples include this being increased by use of finned tubes. The required volume of the gas ducts in the carbonator reactor will be 50 times larger than the volume of the solids beds of 72 $m^3$. This gives following required temperature difference between flue gas and tube wall:

$$\Delta T = \frac{150\ MW}{100\ W\ m^{-2}K^{-1} \cdot 40\ m^2m^{-3} \cdot 50 \cdot 72\ m^3} = 10.4K$$

This implies that gas will be efficiently cooled each time it passes the heat exchanger installed in the gas ducts. Therefore, the solid sorbent in the moving bed 7 will be cooled indirectly in an efficient manner. As the number of passes increases, the temperature rise in the gas phase per pass of a moving bed 7 will reduce.

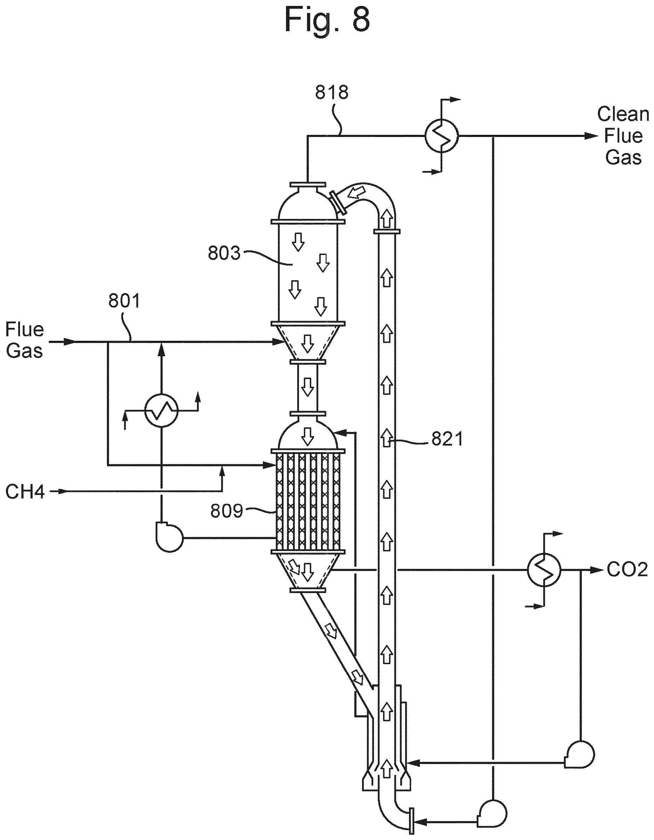

Figure 8 shows a CCS system according to an example. A solid sorbent, such as CaO particles/pellets, as described throughout the present document, move around the CCS system in a loop. The CCS system is appropriate for retro-fitting to a fossil fuel power plant.

The CCS system comprises an input of flue gas 801, a carbonator 803, a calcinator 809, a riser 821, and output of cleaned flue gas 818 and a separate output of substantially pure $CO_2$.

The carbonator is preferably a gas-solid reactor of the first example as described with reference to Figure 1 to 7F. In the carbonator 803, sorbent reacts with the flue gas to thereby substantially reduce the $CO_2$ concentration in the flue gas. In the calcinator 809, the sorbent is regenerated by heating the sorbent so that it releases $CO_2$. The riser then returns the regenerated sorbent to the input of the carbonator 803.

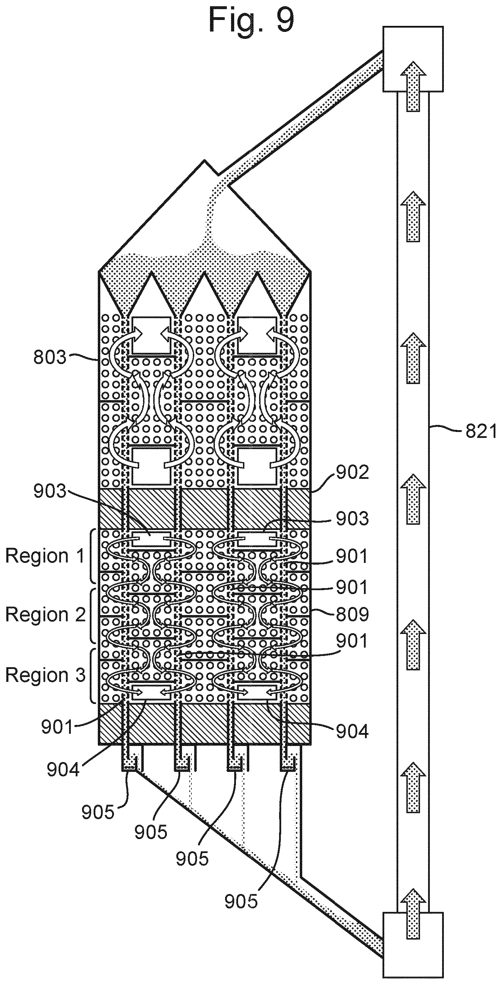

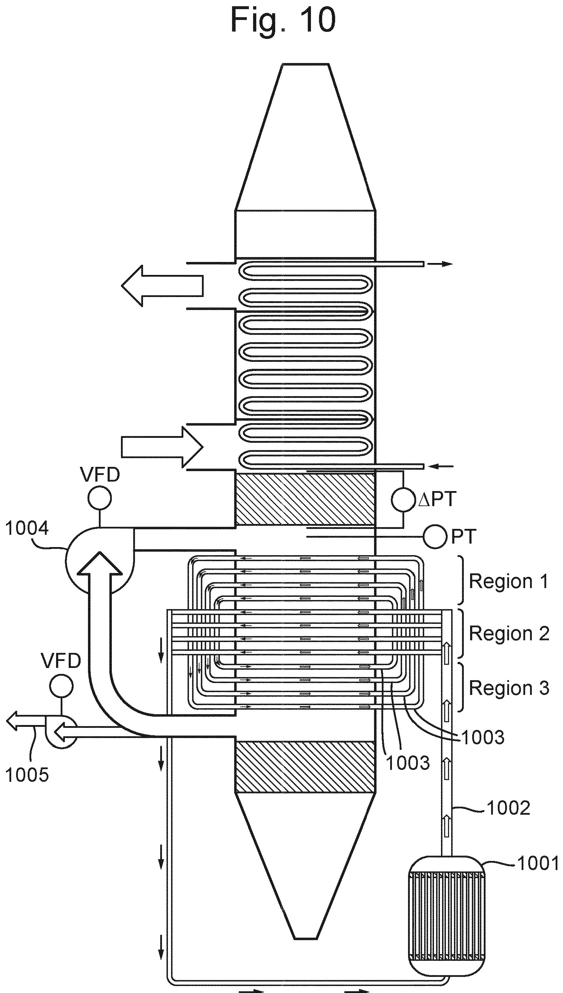

The first reactor, according to the first example, may also be integrated with one or more other reactors. In particular, Figures 9 and 10 also show an implementation of a CCS system according to an example in which an implementation of the first reactor is integrated with a second reactor, as described in detail below.

A second example is described below.

According to the second example, a second reactor 809 is provided. The second reactor 809 is designed to receive solid particles and heat the particles so that the particles release a gas.

A preferred application of the second reactor 809 may be as the above-described calcinator 809 in which the same sorbent that was used in the carbonator 803 is regenerated by heating the sorbent so that it releases carbon dioxide gas.

The second reactor 809 may be used with any type of sorbent. Preferably, the sorbent comprises a metal oxide. More preferably, the sorbent comprises calcium oxide and/or calcium carbonate. Calcium oxide may react in the first reactor 803 with carbon dioxide gas to form calcium carbonate. The sorbent may then be regenerated in the second reactor 809 by heating the calcium carbonate so that it becomes calcium oxide and carbon dioxide gas is released.

The second reactor 809 is described below in the example application of the second reactor 809 receiving particles of calcium carbonate and regenerating the calcium carbonate so that it becomes particles of calcium oxide and carbon dioxide gas is generated.

Examples of the second reactor 809 are shown in Figures 9 and 10. The second reactor 809 is shown integrated with an implementation the above-described first reactor 803 and a riser 903.

The second reactor 809 has a similar construction and design features to the first reactor 803 in that the structure of the second reactor 809 supports substantial cross-flows of gas across solid particles that are travelling vertically downwards in a moving bed 901 with the solid particles retained within the moving bed.

The second reactor 809 comprises inlet(s) at the top of the second reactor 809 through which sorbent enters the second reactor 809. At the bottom of the second reactor 809 are outlet(s) through which sorbent exits the second reactor 809. Between the inlet(s) and the outlet(s) is a main body of the second reactor 809. The main body of the second reactor 809 has outer walls. One or more moving beds 901 are provided in the second reactor 809. Each moving bed 901 extends, from an inlet, vertically downwards through the main body of the second reactor 809 to an outlet of the second reactor 809. The main body of the second reactor 809 also comprises at least one gas inlet, through which gas enters the second reactor 809, and at least one gas outlet, through which gas exits the second reactor 809. Between the vertically arranged moving beds 901, as well as the outer walls of the main body, are gas ducts for gas flows in the main body. Each gas duct comprises a plurality of vertically staked chambers.

The walls of the moving beds 901 comprise strainer plates. The strainer plates have the property of retaining the solid sorbent within each moving bed 901 but gas is able to pass through the strainer plates. The strainer plates in the second reactor 809 may be the same as the strainer plates as described earlier for the first reactor 803.

The strainer plates in the second reactor 809 may also be arranged in the same way as the strainer plates as described earlier for the first reactor 803. Accordingly, in order to minimise the friction and stress on the particles of sorbent in the second reactor 809, the strainer plates are preferably orientated vertically. That is to say, the gap between the plates is linear and orientated so that it is parallel to the flow of sorbent through the second reactor 809. Similarly, when the strainer plate is a wedge wire screen, the flat side of the wedge should provide the inner surface of the outer wall of the moving beds 901 in the second reactor 809, as shown in Figure 7D for the first reactor 803. The wedge should have the property that the openings in the wedge are not so large that particles of the sorbent can pass through the openings, but the openings should be large enough to allow gas to pass through them. The diameter of the sorbent particles/pellets may be about 1mm to 2mm and so an appropriate opening distance in the wedge wire screen may be between 0.2mm to 0.8mm, preferably 0.5mm. The width of the flat side of the wedge that provides the inner surface of the outer wall of the moving beds 901 in the second reactor 809, as shown in Figure 7D for the first reactor 803, may be 1.5mm

Alternatively, the strainer plates may be provided by perforated plates, or a thick rigid perforated plate with fairly large diameter perforation (approx. 10 mm) cladded with a thin sheet with very small perforation (<1 mm). In some applications these may be sufficient for retaining particles of solid sorbent in the moving beds 901 and less expensive than wedge wire screens.

The gas ducts comprise horizontally arranged baffle plates and gas is unable to flow directly through a baffle plate. Preferably, there is at least one baffle plate in each gas duct. The provision of one or more baffle plates in each vertically aligned gas duct divides each gas duct into a plurality of separate and vertically aligned chambers. **In** any two adjacent gas ducts, all of the baffle plates preferably have different vertical positions.

The arrangement of the baffle plates, strainer plates and moving beds 901 in the second reactor 809 is as described for the first reactor 803. Accordingly, gas is forced to flow through from a gas duct, through a strainer plate and into a moving bed, and through a strainer plate and into a gas duct according to the same process as described earlier with reference to Figure 6. The gas flow paths from the gas inlet(s) 903 to the gas outlet(s) 904 therefore comprise gas flows through a plurality of chambers, with the gas flowing through one of the moving beds 901 whenever if flows between two chambers.

The main body of the second reactor 809 is substantially a rectangular cuboid. Each of the moving beds 901, gas ducts and chambers in each gas duct are also substantially rectangular cuboids. Two walls of each moving bed 901 are provided by strainer plates, two further walls of each moving bed 901 are provided by parts of the outer wall of the main body and the moving beds 901 are open at each end in order for sorbent to enter and exit the moving bed. Each gas duct is also cuboid and is either formed between two moving beds 901 or between a moving bed 901 and the outer wall of the main body. The baffle plates in the gas ducts are also thin rectangular cuboids. Advantageously, the components of the main body of the second reactor 809 all have a rectangular cuboid construction and can therefore be easily made. The construction of the second reactor 809 is also easier when rectangular cuboid components are used.

Although the main body of the second reactor 809 is preferably rectangular cuboid, examples also include the second reactor 809 being cylindrical, as well as other shapes.

When the second reactor 809 is used for the application of regenerating a sorbent, the reaction that regenerates the sorbent should be performed at an appropriate temperature for this reaction. For example, the heating of calcium carbonate to generate calcium oxide and carbon dioxide is preferably performed at about 900°C. When the second reactor 809 is used in a sorbent looping system, such as the system shown in Figures 8 to 10, the temperature of the sorbent received by the second reactor 809 is substantially at the temperature that the reaction in the first reactor 803 is performed at. The reaction between calcium oxide and carbon dioxide in the first reactor 803 is preferably performed at about 600°C. The sorbent received by the second reactor 809 is therefore at a lower temperature than an appropriate temperature for the regeneration of the sorbent. The sorbent output from the second reactor 809 is returned to the input of the first reactor 803 via the riser. The temperature of the sorbent received by the first reactor 803 is preferably appropriate for the reaction in the first reactor 803. Accordingly, the temperature of the sorbent output from the second reactor 809 is preferably substantially the temperature required by the first reactor 803.

The second reactor 809 may therefore receive sorbent at about 600°C and it is preferable for the second reactor 809 to output sorbent at about 600°C. Within the second reactor 809, the sorbent is required to be heated to about 900°C so that regeneration of the sorbent can occur.

Figure 9 shows three different regions in the second reactor 809. Region 1 is a fist region, Region 2 is a second region and Region 3 a third region.

The first region is provided at the top of the second reactor 809. In the first region, sorbent received by the second reactor 809 is heated substantially to the temperature required for sorbent regeneration.

The second region is provided below the first region. In the second region, the received sorbent is heated at a temperature for regenerating the received sorbent.

The third region is provided at the bottom of the second reactor 809. In the third region, the sorbent is cooled approximately to a temperature that is appropriate for being input to the first reactor 803.

The second region is therefore provided between the first and third regions such that all of the sorbent that flows from the inlet(s) of the second reactor 809 to the outlet(s) of the second reactor 809 is forced to flow through the first region, then through the second region and then then through the third region.

Figure 10 shows how heat may be supplied to the second region so that the second region is at an appropriate temperature for regenerating the sorbent. The heat may be generated in an external combustor 1001. The external combustor 1001 may be a catalytic combustor and is preferably a catalytic total combustor, such as the catalytic total combustor described in WO 2018/162675.

The heat may be transferred from the external combustor 1001 to the second region by a heat loop/heat exchanger 1002. As shown in Figure 10, the second reactor 809 comprises pipes in the second region for supplying heat to the second region from the external combustor 1001. As shown in Figure 10, a working fluid may flow from the external combustor 1001 through a first manifold so that the working is supplied to a plurality of pipes that pass through the second region. A second manifold receives the working fluid that has flowed through the second region and returns the working fluid to the external combustor 1001. The working fluid may be any suitable working fluid. For example, the working fluid may be one of the noble elements (such as Helium), sodium or any other suitable working fluid. If sodium is used the system can be operated as a self-circulating loop-heat-pipe system.

As described above, the first region heats the received sorbent to the temperature required in the second region and the third region cools the sorbent so that the sorbent output from the third region is approximately the same as the temperature received by the first region. The first and third regions may both be connected heat exchangers such that the heat required in the first region is supplied to the first region by the third region. Heat transfer between the first and third regions both efficiently provides heat to the first region and removes heat from the third region.

As shown in Figure 10, there are preferably a plurality of heat loops/heat exchangers 1003 between the first and third regions. Each of the heat loops 1003 comprises a first part in the first region and a second part in the third region. In each heat loop 1003, heat is transferred from the second part of the heat loop 1003 to the first part of the heat loop 1003.

The symmetry of the second reactor 809 structure results in the sorbent temperature profile from the input of the first region to the output of the first region substantially corresponding to the sorbent temperature profile from the output of the third region to the input of the third region. The efficiency of heat transfer between the first and third regions is highest when the temperature difference between the second part of a heat loop 1003 and the first part of the same heat loop 1003 is small. Accordingly, for each heat loop 1003, the position of the first part of the heat loop 1003 relative to the input and output of the first region substantially corresponds to the position of the second part of the heat loop 1003 relative to the output and input of the second region. That is to say, a heat loop 1003 with a first part that is close to the input of the first region has a second part that is close to the output of the second region. Similarly, a heat loop 1003 with a first part that is close to the output of the first region has a second part that is close to the input of the second region. The first and second parts of each heat loop 1003 are therefore at similar temperatures and this improves the efficiency of heat transfer.

As shown in Figure 10, the heat loops 1003 that have a first part that is closest to the input of the first region may entirely surround all of the heat loops 1003 with a first part that is further away from the input of the first region. Each heat loop 1003 may be surrounded by another heat loop 1003, with the surrounding 1003 heat loop having first and second parts that are at respective positions in the first and second regions with a lower temperature than those of the surrounded heat loop 1003.

Accordingly, the first, second and third regions of the second reactor 809 all comprise pipes for heat transfer into, or out of, the region. The pipes are preferably not provided in the moving beds 901 of the second reactor 809 and are instead provided only in the chambers of the gas ducts between the moving beds 901.

The heat loops 1003 for transferring heat from the third region to the first region, and the external combustor 1001 to the second region, may be any of a number of known heat loop designs. For example, the heat loops 1003 may be any of the heat loops disclosed in: https://www.qats.com/cms/2014/08/04/understanding-loop-heat-pipes/ (as viewed on 15$^{th}$ October 2018).

The heat transfer from the pipes in the second reactor 809 to the sorbent, and vice versa, is via a forced gas flow through the gas ducts/chambers and through the moving beds 901. A source of the gas that transfers the heat is the gas that is released when the sorbent is regenerated. Gas for the heat transfer may also be supplied into the second reactor 809 via the gas inlet(s) 903 of the second reactor 809. Supplying gas into the second reactor 809 via the gas inlet(s) 903 ensures that there is always an appropriate volume of gas for the required heat transfer between the pipes in each region and the sorbent in the moving beds 901.

The supplied gas to the second reactor 809 through the gas inlet(s) 903 of the second reactor 809 may be the same gas as the gas released by the sorbent. For example, if the gas released when the sorbent is regenerated is carbon dioxide then the supplied gas through the gas inlet(s) 903 of the second region may also be carbon dioxide. By supplying the same gas as that released through the gas inlet(s) 903 the purity of the released gas by the sorbent is not reduced.

Figure 10 shows how some of the gas flow through the gas outlet(s) 904 of the second reactor 809 can be fed to the gas inlet(s) 903 of the second reactor 809. The proportion of the gas that is fed to the gas inlet(s) 903 may be controlled by a fan 1004 and/or other gas flow control mechanisms. The gas that is not fed to the gas inlets of the second reactor 809 flows out of the system through the gas outlet 1005 and can be stored or used in commercial applications.

Preferably, the gas inlet(s) 903 of the second reactor 809 are at the top of the second reactor 809 and the gas outlet(s) 904 of the second reactor 809 are at the bottom of the second reactor 809. The pressure of the gas at the top of the second reactor 809 can therefore be accurately controlled by controlling the flow of gas into the second reactor 809.

As shown in Figure 9, a flow control mechanism 905 for controlling the flow of sorbent through each moving bed 901 may be provided at the bottom of the second reactor 809. The flow control mechanism 905 may comprise a loop seal or adjustable baffles as described for the first reactor 803 and shown in Figure 7E and 7F. Implementations of a flow control mechanism 905 that may be used are also shown in Figures 11A to 11D.

The flow control mechanism 905 shown in Figures 11A to 11C are all activated by a gas flow. The flow control mechanism 905 shown in Figure 11A is a loop seal. The flow control mechanism 905 shown in Figure 11B is an L-seal. The flow control mechanism 905 shown in Figure 11C is a J-seal.

The flow control mechanism 905 shown in Figure 11D is a vibration activated seal. When the vibrator is not vibrating, the friction between the sorbent particles prevents the sorbent from flowing out of the moving bed. When the vibrator is activated, the vibrator causes the end of the duct comprising the sorbent vibrate. This reduces the friction between the sorbent particles and the sorbent flows out of the duct, and consequently the moving bed.

The second example includes the second reactor 809 being used in any application. Although the second reactor 809 is shown in Figures 9 and 10 integrated with the first reactor 803 according to the first example, the second reactor 809 may not be integrated with the first reactor 803 and may be a separate reactor as shown in Figure 8. The second reactor 809 can be used on its own or in conjunction with any other type of reactor.

According to a third example, the first reactor 803, as described above for the first example, and the second reactor 809, as described above for the second example, are integrated together.

The integration of the first and second reactors is particularly advantageous for the specific application of looping a sorbent of a gas. The sorbent captures gas in the first reactor 803 and then releases the gas in the second reactor 809.

The first reactor 803 may be provided directly above the second reactor 809 as shown in Figures 9 and 10. The first reactor 803 is thermally insulated from the second reactor 809 by the insulating section 902. Each of the moving beds 901 pass unobstructed from the first reactor 803, through the insulating section 902 and to the second reactor 809. The walls of the moving beds 901 in the part of the moving bed 901 in the insulating section 902 are a solid wall and not a sintered plate.

Sorbent travels vertically downwards in the moving beds 901 from the inlet(s) of the moving beds 901 in the first reactor 803, through the first reactor 803, through the insulating section 902, through the second reactor 809 and through the outlet(s) of the moving beds 901 in the second reactor 809.

There may be no flow control mechanism at the bottom of the first reactor 803 and only a flow control mechanism 905 at the bottom of the second reactor 809, as described above for the second example.

The third example is particularly preferable in a sorbent looping system in which sorbent that has passed through the first and second reactors is returned to the sorbent inlet(s) of the first reactor 803.

The sorbent that flows out of the flow control mechanism 905 is returned to the top of the first reactor 803 by the riser 821. The riser may be any type of riser. For example the riser may be a gas driven riser as described in WO 2018/162675. The riser may alternatively be a spiral elevator. The spiral elevator may be vibration driven. An demonstration of the operation of a vibration driven elevator is provided here: https://www.youtube.com/watch?v=Foi_J1sJ0wI (as viewed on 15th October 2018). Particles are transported from the bottom of the spiral elevator to the top of the spiral elevator by vibrating the elevator. The riser may alternatively be a mechanical conveyor system.

Sensors may measure the temperatures and pressures throughout the system. There may also be sensors that measure the concentration of the gas to be captured by the sorbent, such as carbon dioxide, in the gas mixture received by the first reactor 803 and the gas flowing out of the first reactor 803. The measurements may be automatically provided to a computing system. The flow of gas into the first reactor 803, the flow of sorbent through the first and second reactors, the flow of gas into the second reactor 809, the cooling of the first reactor 803 and the heating of the second reactor 809 are preferably all automatically controlled by the computer system. The computing system may automatically control the processes in order to efficiently capture a gas, such as carbon dioxide, from the gas mixture received by the first reactor 803. The computing system may also automatically detect operational errors/faults of the system in dependence on the automatic feedback of data from the sensors.

In a preferred implementation of the third example, the gas inlet(s) of the first reactor 803 are at the bottom the first reactor 803 and the gas outlet(s) from the first reactor 803 are at the top of the first reactor 803. The gas inlet(s) 903 of the second reactor 809 are at the top the second reactor 809 and the gas outlet(s) 904 the second reactor 809 are at the bottom of the second reactor 809. This arrangement allows the pressure difference between the bottom of the first reactor 803 and the top of the second reactor 809 to be accurately controlled by controlling the gas flows into the first and second reactors. The pressure difference is preferably controlled such that the gas pressure at the top of the second reactor 809 is slightly larger than the gas pressure at the bottom of the first reactor 803. This prevents any flow of the gas in the first reactor 803 into the second reactor 809 and the consequent reduction of the purity of the captured gas. The pressure difference is preferably controlled such that it is not substantially larger than necessary to prevent gas flow from the first reactor 803 to the second reactor 809 so that a substantial flow of gas from the second reactor 809 to the first reactor 803 does not occur. Appropriate control of the pressure difference also avoids any requirement for a gas solid lock to be provided between the first and second reactors.

The above-described sorbent loping system comprising integrated first and second reactors according to the third example may be used for the application of capturing carbon dioxide from a flue gas. A sorbent captures carbon dioxide in the first reactor 803 and the sorbent is regenerated, with the carbon dioxide being released, in the second reactor 809. The released carbon dioxide can then be used in commercial applications or stored.

The above-described sorbent loping system according to examples comprises:

- A carbonation region in which a sorbent removes $CO_2$ from a gas mixture comprising $CO_2$;
- A heating region in which the sorbent is heated from the carbonation temperature to the sorbent regeneration temperature;
- A sorbent regeneration region in which the sorbent is heated at temperature that causes the sorbent to release $CO_2$; and
- A cooling region in which the sorbent is cooled from the sorbent regeneration temperature to the carbonation temperature.

The system may comprise any of number of possible implementations of each of the above regions.

The processes in the carbonation region may be the earlier described processes in the reactor according to the first example. The heating region, sorbent regeneration region and cooling region may respectively be the first region, second region and third region as described earlier in the second and third examples.

Each of the four regions may be provided by a separate apparatus or two or more of the regions may be provided within different parts of the same apparatus.

Two or more of the regions may be coupled with each other, for example by using heat exchangers between heating region and the cooling region as described above. However, examples also include each of the regions being operated independently from the other regions. That is to say, the heating region may comprise a separate heat source from the heat source that provides heat to the sorbent regeneration region and the cooling region may comprise a heat sink that is not coupled to the heat source of the heating region.

The system may also comprise any of number of possible implementations of techniques for moving the sorbent between the different regions.

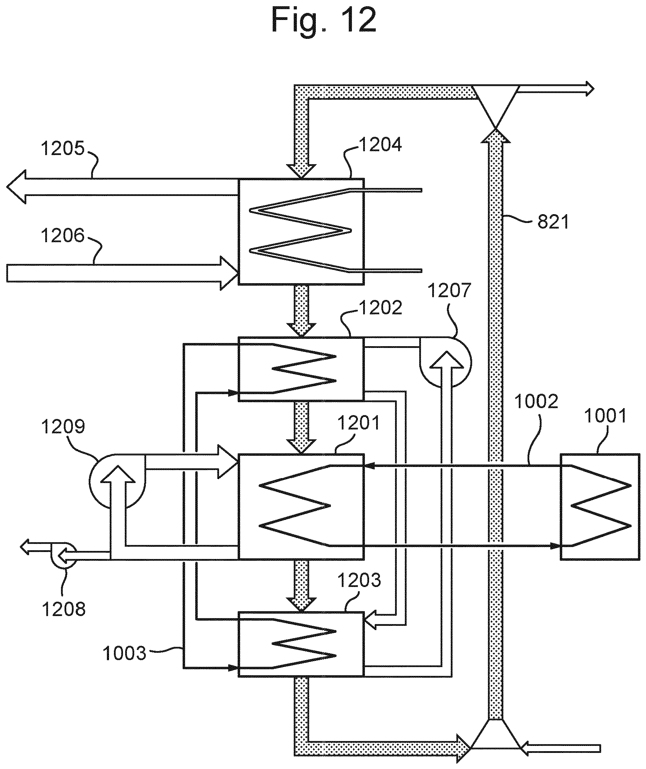

An implementation of a sorbent loping system according a fourth example is shown in Figure 12. The system comprises a carbonation region 1204, a heating region 1202, a sorbent regeneration region 1201 and a cooling region 1203. There is a gas input 1206 for a carbonaceous gas, such as a flue gas, and a first gas output 1205 of the cleaned gas. There is a second gas output 1208 for the released gas in the sorbent regeneration region 1201. There is a riser 821 for returning the sorbent to the sorbent input of the carbonation region 1204. The riser may be the riser 821 as described earlier in at least the first and third examples.

Each of the carbonation region 1204, heating region 1202, sorbent regeneration region 1201 and cooling region 1203 may be provided by separate reactors or as different parts of one or more reactors. Each of the carbonation region 1204, heating region 1202, sorbent regeneration region 1201 and cooling region 1203 may be operated independently from each of the other regions, or two or more of the regions may be coupled together.

The carbonation region 1204 may be provided by the first reactor 803 as described in the first and third examples. The heating region 1202, sorbent regeneration region 1201 and cooling region 1203 may be respectively provided by the first region, second region and third region as described in the second and third examples. There may be heat loops/heat exchangers 1003 between the heating region 1202 and cooling region 1203 as described of the first and third regions in the second and third examples.

The heat source of the sorbent regeneration region 1201 may be an external combustor 1001 that transfers heat to the sorbent regeneration region 1201 as described earlier for the second and third examples.

In each of the carbonation region 1204, heating region 1202, sorbent regeneration region 1201 and cooling region 1203, there is contact between particles of solid sorbent and a gas. The one or more reactors for providing each of these regions may have the reactor design as described in the first to third examples in which the reactors support substantial cross-flows of gas across solid particles that are travelling vertically downwards in a moving bed.

In the implementation of a sorbent loping system 1207 according to the fourth example shown in Figure 12, the heating region 1202 and cooling region 1203 are coupled together by the heat loops 1003 as described earlier for the second and third examples.

A first gas circulation system 1207 circulates a gas between the heating region 1202 and cooling region 1203. The gas is used in each region to transfer heat between the heat loops 1003 and the sorbent. The first gas circulation system 1207 may comprise one or more fans, with variable frequency drives, valves and other components for controlling the amount of gas in the first gas circulation system 1207 and the rate at which gas flows around the first gas circulation system 1207.

A second gas circulation system 1209 circulates a gas within the sorbent regeneration region 1201. The gas is used in the sorbent regeneration region 1209 to transfer heat between the heat loops 1002 and the sorbent. The second gas circulation system may comprise one or more fans, with variable frequency drives, valves and other components for controlling the amount of gas in the second gas circulation system 1209 and rate at which gas flows around the second gas circulation system 1209. The second gas circulation system 1209 comprises the second gas output 1208 for outputting substantially pure $CO_2$.

In the fourth example, the first gas circulation system 1207 is separate from the second gas circulation system 1209. The gas used in the first gas circulation system 1207 may therefore be different from the gas used in the second gas circulation system 1209.

The gas used in the first gas circulation system 1207 may be, for example, air, nitrogen, clean flue gas or an inert gas. It is preferable for the gas in the first gas circulation system 1207 to be a gas that does not substantially react with the sorbent so that the reactions with the sorbent substantially only occur in the carbonation region 1204 and sorbent regeneration region 1201.

The gas used in the second gas circulation system 1209 is preferably the same gas released by the sorbent, i.e. $CO_2$, so that substantially pure $CO_2$ is output and an additional process to obtain substantially pure $CO_2$ is not required.

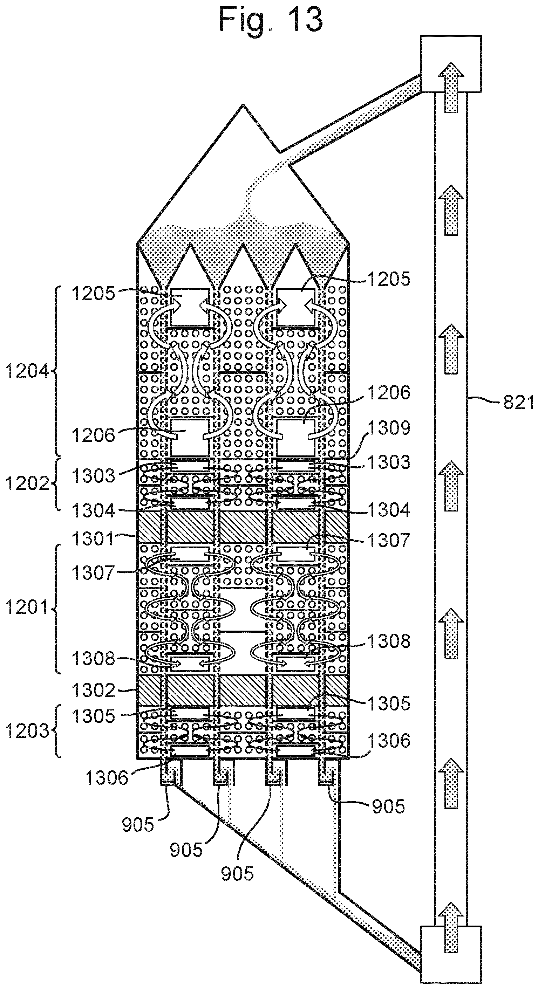

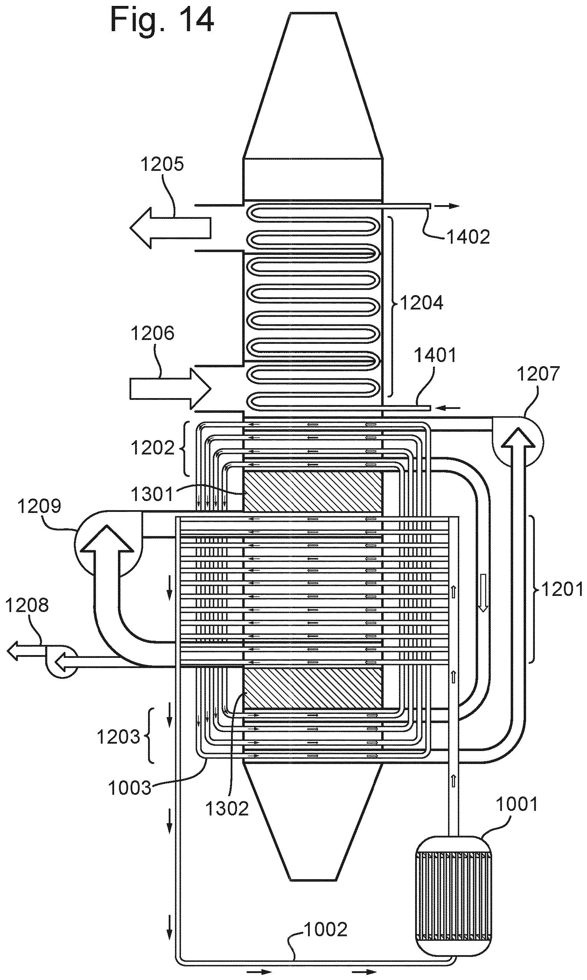

Figures 13 and 14 show orthogonal cross-sections of an implementation of a system according to the fourth example. The carbonation and sorbent regeneration processes are integrated within a single reactor of the system.

The reactor of the system comprises a carbonation region 1204, a heating region 1202, a sorbent regeneration region 1201 and a cooling region 1203.

The reactor has a similar design to the reactors as described in the previous examples. The reactor comprises inlet(s) at the top of the reactor through which sorbent enters the carbonation region 1204 of the reactor. At the bottom of the cooling region 1203 of the reactor are outlet(s) through which sorbent exits the cooling region 1203. Between the inlet(s) and the outlet(s) is a main body of the reactor. The main body of the reactor has outer walls. One or more moving beds are provided in the reactor. Each moving bed extends, from an inlet, vertically downwards through the main body of the reactor to an outlet of the reactor. Between the vertically arranged moving beds, as well as the outer walls of the main body, are gas ducts for gas flows in the main body. Each gas duct comprises a plurality of vertically stacked chambers. The walls of the moving beds comprise strainer plates and the gas ducts comprise baffle plates, for providing a substantial cross-flow of sorbent and gas, as described for the first to third examples. The main body of the reactor is preferably rectangular cuboid, but examples also include the reactor being cylindrical, as well as other shapes.

At the bottom of the reactor is a flow control mechanism 905 for controlling the flow of sorbent through the reactor. The flow control mechanism 905 may be the same as described earlier for the first and second examples with reference to Figures 7E, 7F, 11A, 11B, 11C and 11D.

The carbonation region 1204 comprises at least one gas inlet 1206, through which gas enters the carbonation region 1204, and at least one gas outlet 1205, through which gas exits the carbonation region 1204. The at least one gas inlet 1206 may be provided at the bottom of carbonation region 1204 and the at least one gas outlet 1205 may be provided at the bottom of carbonation region 1204. The carbonation region 1204 may separated from the heating region 1202 by a gas barrier 1309 that comprises plates across the gas ducts with all of the plates being in the same plane. The carbonation region 1204 comprises a coolant input 1401 and a coolant output 1402. In use, a coolant flows through the carbonation region 1204 to maintain the carbonation region 1204 at an appropriate temperature for the carbonation reaction.

The heating region 1202 is separated from the sorbent regeneration region 1201 by a first barrier 1301 that allows the sorbent to flow between the heating region 1202 and the sorbent regeneration region 1201 but substantially prevents gas flow between these regions. The heating region 1202 comprises one or more gas inputs 1303 and one or more gas outputs 1304. The one or more gas inputs 1303 may be provided at the top of the heating region 1202 and the one or more gas outputs 1304 may be provided at the bottom of the heating region 1202.

The sorbent regeneration region 1201 is separated from the cooling region 1203 by a second barrier 1302 that allows the sorbent to flow between the sorbent regeneration region 1201 and the cooling region 1203 but substantially prevents gas flow between these regions. The sorbent regeneration region 1201 comprises at least one gas input 1307 and at least one gas output 1308. The at least one gas input 1307 may be provided at the top of the sorbent regeneration region 1201 and the and at least one gas output 1308 at the bottom of the sorbent regeneration region 1201. The heat source of the sorbent regeneration region 1201 may be an external combustor 1001 that transfers heat to the sorbent regeneration region 1201 as described earlier for the second example. The sorbent regeneration region 1201 comprises a second gas circulation system 1209 as described above. The gas used in the second gas circulation system 1209 is preferably the same gas released by the sorbent, i.e. $CO_2$.

The cooling region 1203 comprises one or more gas inputs 1305 and one or more gas outputs 1306. The one or more gas inputs 1305 may be provided at the top of the cooling region 1203 and the one or more gas outputs 1305 may be provided at the bottom of the cooling region 1203.

The heating region 1202 and cooling region 1203 are coupled together by heat loops 1003, as described above and earlier for the second and third examples, as well as a first gas circulation system 1207 as described above. The gas used in the first gas circulation system 1207 may be, for example, air, nitrogen, clean flue gas or an inert gas.

The temperature profile through the reactor is substantially as described for the third example. The temperature of the sorbent in the carbonation region 1204 may be about 600°C. The temperature of the sorbent at the output of the heating region 1202 may be about 850°C. In the a sorbent regeneration region 1201, the received sorbent may be heated to about 900°C. The temperature of the sorbent at the output of the cooling region 1203 may be about 600°C to 650°C.

In the fourth example, sensors may measure the temperatures and pressures throughout the reactor/system. There may also be sensors that measure the concentration of the gas to be captured by the sorbent, such as carbon dioxide, in the gas mixture received by the carbonation region 1204 and the gas flowing out of the carbonation region 1204. The measurements may be automatically provided to a computing system. The flow of gas into the carbonation region 1204, the flow of sorbent through the reactor, the flow of gas into and around the first and second gas circulation systems, the cooling in the carbonation region 1204, the heating of the sorbent regeneration region 1201 and the heat exchange between the heating region 1202 and cooling region 1203 are preferably all automatically controlled by the computer system. The computing system may automatically control the processes in order to efficiently capture a gas, such as carbon dioxide from a gas mixture. The computing system may also automatically detect operational errors/faults of the system in dependence on the automatic feedback of data from the sensors.

Preferably, the pressures throughout the system are controlled so that there is substantially no pressure difference across the gas barrier 1309, the first barrier 1301 and the second barrier 1302 in the reactor so there is substantially no gas flow across the interfaces between the different regions within the reactor.

The fourth example also includes alternative implementations in which two or more of the carbonation region 1204, heating region 1202, sorbent regeneration region 1201 and cooling region 1203 are provided by separate reactors and not integrated together in a single reactor.

The above-described implementation of sorbent loping system of the fourth example may be used for the application of capturing carbon dioxide from a flue gas. A sorbent captures carbon dioxide in the carbonation region 1204 and the sorbent is regenerated, with the carbon dioxide being released, in the sorbent regeneration region 1201. The released carbon dioxide can then be used in commercial applications or stored.

According to a fifth example, the system is designed for the application of hydrogen, $H_2$, production. $H_2$ production by reforming processes generates a gas mixture comprising $H_2$ and $CO_2$. The system of the fifth example uses similar processes to those described for the fourth example to remove the $CO_2$ from the gas mixture to thereby generate substantially pure $H_2$. The sorbent used in the fifth example may be the same sorbent of $CO_2$ as described in the first to fourth examples.

A known process is sorption enhanced reforming, SER. In an SER reaction, methane is reacted with $H_2O$ to generate CO, $CO_2$ and $H_2$. An SER reaction may be performed at approximately 575°C.

Another known process is a sorption enhanced water gas shift, SEWGS, reaction. In an SEWGS reaction, CO is reacted with $H_2O$ to generate $CO_2$ and $H_2$. An SEWGS reaction may be performed at approximately 400°C to 450°C.

In the fifth example, one or more reactors are provided for performing SER and SEWGS reactions. Generated $CO_2$ by the SER and SEWGS reactions is removed by a moving bed of a sorbent of $CO_2$. The sorbent is then regenerated and returned to a sorbent input of the moving bed.

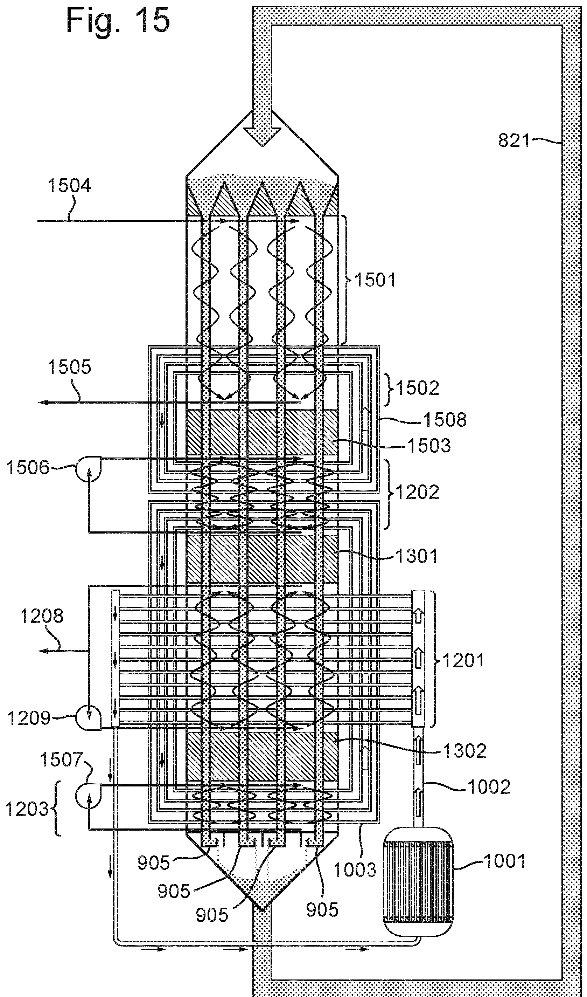

Implementations of the fifth example are shown in Figures 15, 16 and 17. Figures 15, 16 and 17 show cross-sections of implementations of a system according to the fifth example. The SER, SEWGS, carbonation and sorbent regeneration processes are all integrated within a single reactor of the system.

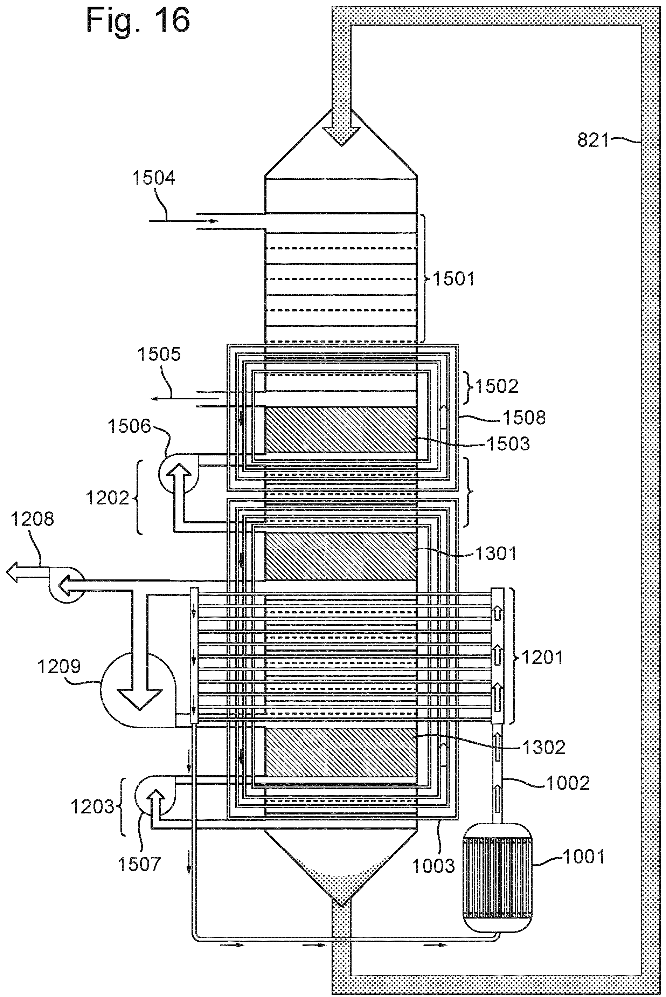

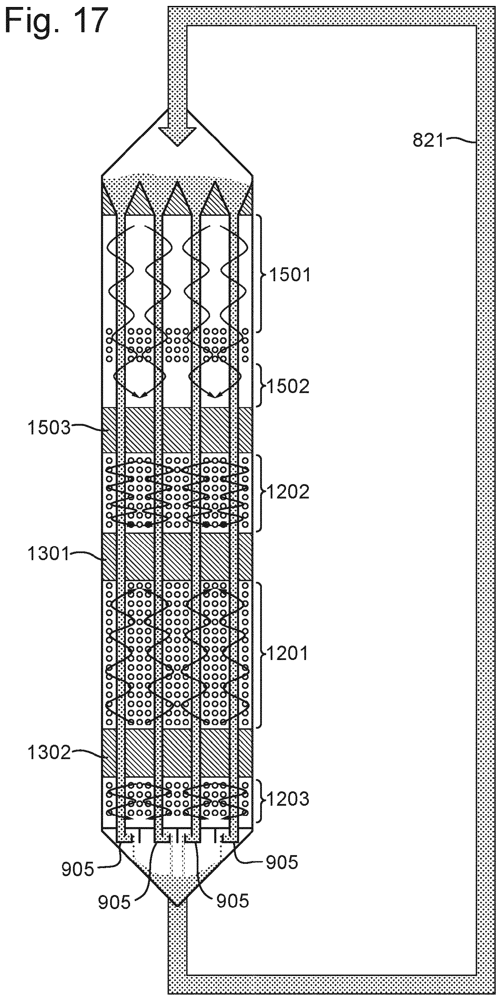

Figure 15 shows a first implementation of a system according to the fifth example in which pipes for heating and cooling pass through moving beds of the reactor system. Figures 16 and 17 show a second implementation of a system according to the fifth example. In the second implementation, the pipes are orthogonal to how they are shown in Figure 15. The pipes of the second implantation only pass through gas ducts and not the moving beds. All of the other features of the first and second implementations of the fifth example may be the same as each other.

The system comprises a riser 821 for moving sorbent from the sorbent input of the reactor to the sorbent out of the reactor. The riser may be substantially as described for the previous examples. However, for gas driven implementations of the riser, the gas should be one of the gasses input to the SER and SEWGS regions of the reactor, such as methane.

The reactor of the system comprises an SER region 1501, an SEWGS region 1502, a heating region 1202, a sorbent regeneration region 1201 and a cooling region 1203. The SER region 1501 and SEWGS region 1502 together provide a carbonation region in which sorbent removes the $CO_2$ that is generated by the reaction processes.

The reactor has a similar construction to the reactor as described for the fourth example. The reactor comprises inlet(s) at the top of the reactor through which sorbent enters the SER region 1501 of the reactor. At the bottom of the cooling region 1203 of the reactor are outlet(s) through which sorbent exits the cooling region 1203. Between the inlet(s) and the outlet(s) is a main body of the reactor. The main body of the reactor has outer walls. One or more moving beds are provided in the reactor. Each moving bed extends, from an inlet, vertically downwards through the main body of the reactor to an outlet of the reactor. Between the vertically arranged moving beds, as well as the outer walls of the main body, are gas ducts for gas flows in the main body. Each gas duct comprises a plurality of vertically stacked chambers. The walls of the moving beds comprise strainer plates and the gas ducts comprise baffle plates, for providing a substantial cross-flow of sorbent and gas, as described for the first to fourth examples. The main body, and/or moving beds, of the reactor are preferably rectangular cuboid, but examples also include the reactor being cylindrical, as well as other shapes.

At the bottom of the reactor is a flow control mechanism 905 for controlling the flow of sorbent through the reactor. The flow control mechanism 905 may be the same as described earlier for at least the first and second examples with reference to Figures 7E, 7F, 11A, 11B, 11C and 11D.

The SER region 1501 comprises at least one gas inlet 1504, through which gas enters the SER region 1501. In use, $CH_4$ and $H_20$ are input into the SER region 1501 and the above described SER reaction is performed at about 575°C.

Another reaction that occurs in the SER region 1501 is a carbonation reaction with sorbent in the moving bed. The carbonation reaction removes from the gas mixture in the SER region some, or all, of the $CO_2$ generated by the SER reaction. There may be no need for a cooling, or heating, system in the SER region because the SER reaction is endothermic and the carbonation reaction is exothermic. The reaction temperature may therefore remain approximately constant at about 575°C to 600°C so long as both the SER reaction and the carbonation reaction are occurring. The reaction temperature may fall when the $CO_2$ concentration falls and less carbonation is occurring.

In an alternative implementation of the present example, the SER region may comprise a heating system and/or cooling system for controlling the reaction temperature.

The SEWGS region 1502 is located below the SER region 1501 and there may be no barrier separating the SER region 1501 and SEWGS region 1502. A SEWGS reaction is performed in the SEWGS region. The temperature at which the SEWGS reaction is performed may be about 450°C. The sorbent and/or gas temperature may fall from 575°C to 450°C as the amount of carbonation decreases. However, as described in more detail below, the sorbent and/or gas temperature may be actively decreased by a cooling system. The $CO_2$ generated by the SEWGS reaction is removed by the sorbent and so substantially the only gas remaining is the $H_2$ product of the SER and SEWGS reactions. The SEWGS region 1502 comprises at least one gas outlet 1505, through which gas exits the SEWGS region 1502.

The SEWGS region 1502 may be separated from the heating region 1202 by a third gas barrier 1503 that allows the sorbent to flow between the SEWGS region 1502 and the heating region 1201 but substantially prevents gas flow between these regions.

Heat loops/heat exchangers 1508 may be provided between the SEWGS region 1502 and the heating region 1202. The heat loops/heat exchangers 1508 cool the gas and/or sorbent so that it is at an appropriate temperature for the SEWGS reaction. The heat loops/heat exchangers 1508 may have the same arrangement of loops as the previously described heat loops in the second to fourth examples. That is to say, a first loop may be surrounded by a second loop with the second loop having parts in higher temperature zones than the first loop.

In an alternative implementation of the present example, there is no heat exchanger between the SEWGS region 1502 and the heating region 1202. An independent heating and/or cooling system may be provided between the SER region 1501 and the SEWGS region 1502 for controlling the temperature of the gas and/or sorbent as it enters the SEWGS region. Similarly, an independent heating and/or cooling system may be provided in the heating region 1202 for controlling the temperature of the gas and/or sorbent therein.

The heating region 1202 is separated from the sorbent regeneration region 1201 by a first barrier 1301, as described for the fourth example. A difference between the implementation of the heating region 1202 as shown in Figures 15 to 17 and that shown in Figures 12 to 14 is that the heating region 1202 in Figures 15 to 17 has its own gas circulation system that is not coupled to the gas circulation system of the cooling region 1203. The heating region 1202 may otherwise be substantially the same as the heating region 1202 as described for the fourth example.

The sorbent regeneration region 1201 is separated from the cooling region 1203 by a second barrier 1302 as described for the fourth example. The sorbent regeneration region 1201 may be substantially the same as that of the fourth example. The heat source of the sorbent regeneration region 1201 may be an external combustor 1001 that transfers heat to the sorbent regeneration region 1201 via heat loop/heat exchanger 1002 as described for the second and fourth examples. The sorbent regeneration region 1201 comprises its own gas circulation system 1209 as described for the fourth example. The gas used in the second gas circulation system 1209 is preferably the same gas released by the sorbent, i.e. $CO_2$.

A difference between the implementation of the cooling region 1203 as shown in Figures 15 to 17 and that shown in Figures 12 to 14 is that the cooling region 1203 in Figures 15 to 17 has its own gas circulation system that is not coupled to the gas circulation system of the heating region 1202. The cooling region 1203 may otherwise be substantially as described for the fourth example.

The gas used in each of the heating region 1202 and cooling region 1203 may be, for example, air, nitrogen, $H_2$ or an inert gas.

In the fifth example, sensors may measure the temperatures and pressures throughout the reactor/system. There may also be sensors that measure the concentration of the gasses, such as hydrogen and carbon dioxide. The measurements may be automatically provided to a computing system. All of the gas flows, the flow of sorbent through the reactor, the heating and any cooling are preferably automatically controlled by the computer system. The computing system may also automatically detect operational errors/faults of the system in dependence on the automatic feedback of data from the sensors.

Preferably, the pressures throughout the system are controlled so that there is substantially no pressure difference across the third gas barrier 1503, the first barrier 1301 and the second barrier 1302 in the reactor. Such pressure control helps to ensure that there is substantially no gas flow across the interfaces between the different regions within the reactor.

The fifth example also includes alternative implementations in which two or more of the SER region 1501, SEWGS region 1502, heating region 1202, sorbent regeneration region 1201 and cooling region 1203 are provided by separate reactors and not integrated together in a single reactor.

The above-described implementation of sorbent loping system of the fifth example may be used for the application of hydrogen generation by reforming processes. Advantageously, the $CO_2$ bi-product of the $H_2$ production process is captured.

In an alternative implementation of the fifth example, there is an SER region but no SEWGS region. This allows a simpler reactor design because there is no need for a cooling system to cool the gas and/or sorbent between the SER region and the heating region 1202. A single gas circulation system may circulate gas between the heating region 1202 and cooling region 1203 as described above for the fourth example. The present implementation of the fifth example may otherwise be substantially as described above with reference to Figures 15 to 17.

In the present implementation, an SEWGS reaction is not performed and so the produced gas may comprise CO, and/or other gasses, in addition to the main $H_2$ product. The main $H_2$ product may be polished, i.e. purified, by passing it through a membrane or using other techniques. Alternatively, for applications in which the purity of the $H_2$ is not critical, the main $H_2$ product may be used directly. For example, the main $H_2$ product may be combusted in a gas turbine.

Other techniques may be used to heat the sorbent up the temperature required in the sorbent regeneration region 1201. For example, exhaust gas may be injected from a catalytic combustor that will both heat the sorbent directly, and also indirectly due the carbonation occurring. A heat exchanger with any suitably high temperature source may also be used.

The sorbent regeneration region may alternatively be heated directly by injecting oxygen and $CH_4$, and/or CO, from gas reforming.

The sorbent output from the sorbent regeneration region may alternatively be cooled directly the riser 821, that is a gas riser, by using cold $CH_4$ to lift the gas and then using the CH4 as a reactant in the SER region.

The fifth example has been described with reference to the use of methane as a reactant in a reforming process. Examples also include natural gas, and other hydrocarbon containing gasses, being used instead of methane.

Implementation of the fifth example also includes the use of a catalyst for accelerating the SER reaction and/or SEWGS reaction. The catalyst may be any known catalyst for SER and/or SEWGS processes. The catalyst may be, for example, a reforming catalyst of Pd-Ni/Co supported on a hydrotalcite-derived material, i.e. a Pd-Ni/Co HT catalyst.

The pellets/particles of catalyst may be added to those of the sorbent so that the looped particles around the entire system comprise both sorbent particles and separate catalyst particles.

Alternatively, pellets/particles may be used that are a combined sorbent and catalyst. For example, the catalyst may be deposited on some, or all, of the outer surfaces of the sorbent pellets/particles during the production process of the sorbent. Advantages of such a combined sorbent and catalyst over separate particles of sorbent and catalyst may include the diffusional limitations being decreased, easier circulation around the entire system and lower total cost.

Alternatively, the supply of the catalyst to the SER and SEWGS regions may be independent from that of the sorbent. For example, the SER and SEWGS regions may comprise fixed beds of catalyst. The fixed beds may be arranged in parallel to the moving beds of sorbent with gas being able to pass through both beds. An advantage of this implementation is that if the sorbent is discarded, and replaced with a new sorbent, the catalyst, that may comprise expensive metals, is not also discarded.

Examples also include the use of known SER and/or SEWGS processes to generate an $H_2$ and $CO_2$ gas mixture. The $H_2$ and $CO_2$ gas mixture is then used as the gas input to the system according the third or fourth examples that is used to separate the $CO_2$ and $H_2$ gasses.

The sorbent that may be used in examples is described in more detail below.

A particularly advantageous sorbent for carbon dioxide is a mixed oxide, in particular CaO, MgO and NaO based mixed oxide forms. Particularly preferred sorbents are the sorbents as disclosed in International patent applications with application numbers PCT/EP2006/003507 and PCT/EP2018/055828.

The sorbent may be comprised of solid particles. The particles may be small and substantially spherical balls and/or pellets (e.g. substantially cylindrical). The active component of the sorbent, for example calcium oxide/calcium carbonate, is preferably combined with a binding agent.

The capture and release of the gas by the sorbent is due to reaction of the sorbent with the gas. The reactions may be adsorption and/or desorption processes or by other processes that result in the capturing and/or release of a gas.

Examples also include the capture of other gasses than carbon dioxide, in particular examples include the capture of hydrogen sulphide from sour gas. The sorbent may be one or more of MnO, CuO and ZnO.

Examples also include the use of a mixture of different sorbents so that more than one gas is captured by the gas capture system. For example, different sorbent particles for carbon dioxide and hydrogen sulphide could be mixed and then used together. The gas capture system may then capture both carbon dioxide and hydrogen sulphide from a gas stream.

The sorbent changes between a used form and a regenerated form as it is recirculated about the system. The term sorbent refers generally to particles of the sorbent at any point in the sorbent cycle and may refer to the sorbent when it is in either its used form or regenerated form. In addition, the sorbent at any point in the sorbent cycle may always be a mixture of particles of the sorbent in the used form and in the regenerated form. The gas capturing and sorbent regenerating processes change the relative concentrations of the forms of the sorbent at a particular point in the sorbent cycle.

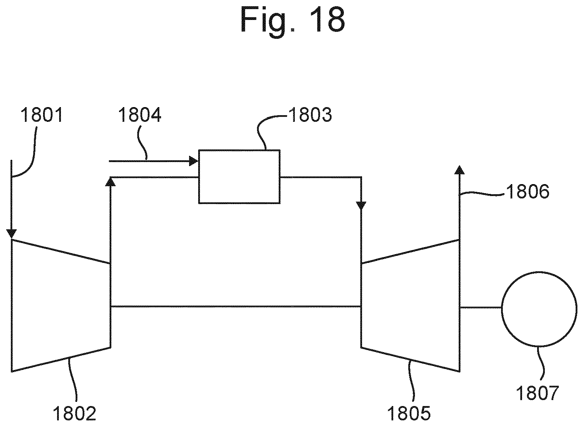

Figure 18 shows the basic components of a known design of gas turbine. The gas turbine comprises a compressor 1802 with a gas intake system 1801, a combustor 1803 and a fuel feed system 1804. The gas, typically air, passes from the gas intake system 1801 into the compressor 1802 where it is compressed. The compressed gas is then fed into the combustor 1803 where fuel provided by the fuel feed system 1804 is burnt. The gaseous combustion products are fed into the turbine 1805 and are expanded to a lower pressure, that may be close to atmospheric pressure, and are then exhausted through an exhaust unit 1806. Some of the power from the turbine 1805 is used to drive the compressor 1802 as well as to drive any auxiliary units of the gas turbine (pumps, electric generators, mechanisms etc.) and to overcome hydraulic resistance in the gas turbine unit. The remaining power from the turbine 1805 is used to drive a load mounted on the turbine shaft 1807. The load may be, for example, an electric generator.

According to embodiments, a fuel comprising hydrogen is used in the combustor of a gas turbine. The gas turbine may be a known gas turbine as described with reference to Figure 18.

Embodiments do not use pure hydrogen as the fuel in the combustor of a gas turbine. The fuel according to embodiments is a gas mixture that comprises hydrogen. The fuel according to embodiments may comprises hydrogen and one or more of at least $CH_4$, $CO_2$, CO, $H_2O$, $O_2$ and $N_2$.

Preferably, 30%vol to 55%vol of the fuel is hydrogen. More preferably, 40%vol to 50%vol of the fuel is hydrogen. Further preferably, approximately 40%vol of the fuel is hydrogen. It is preferable for the amount of hydrogen to be less than 50%vol of the fuel.

Preferably, most of the rest of the fuel is $N_2$. The fuel may also comprise a relatively small amount of $CO_2$. The fuel may also comprise a relatively small amount of $H_2O$. Small, or trace, amounts of any of $CH_4$, CO and $O_2$ may also be present in the fuel.

The fuel according to embodiments may be generated by combining the constituent gasses or of the fuel by any known means. For example, a fuel according to embodiments may be generated by combining substantially pure hydrogen with substantially pure nitrogen and substantially pure $CO_2$.

The gasses that are combined to generate the fuel may have any source. For example, the hydrogen in the fuel according to embodiments may have been generated by an electrolysis process.

In a particularly preferred embodiment, the source of hydrogen in the fuel is a reactor according to the above-described fifth example. A source of other gasses in the fuel according to embodiments is preferably at least the exhaust gas of a combustor for generating the heat required for the sorbent regeneration process.

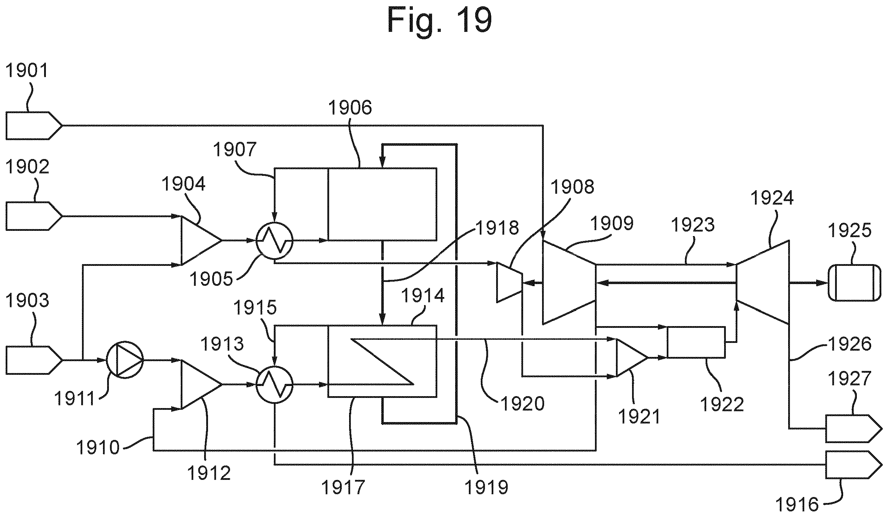

Figure 19 is a flow diagram of a gas turbine system according to an embodiment. The flow diagram in Figure 19 shows how a gas turbine may be integrated with a hydrogen producing reactor according the above-described fifth example. However, embodiments also include the gas turbine being integrated with other designs of reactor for producing hydrogen by reforming, electrolysis or other processes.

As shown in Figure 19, the gas turbine system comprises a first input 1901 that is an input of air to the compressor. The air may be at atmospheric pressure.

The gas turbine system comprises a second input 1902 that is a input of water, that may be in the form of water vapour or steam.

The gas turbine system comprises a third input 1903 that is a input of carbonaceous gas that may be, for example, methane, natural gas or biogas.

The gas turbine system comprises a mixer 1904 for mixing the reactants that are input to the hydrogen producing reactor 1906. The hydrogen producing reactor may be the SER reactor, or combined SER and SEWGS reactor, according to the above-described fifth example. A catalyst for the reforming process in the hydrogen producing reactor may be Pd-Ni-Co.

The gas turbine system comprises a heat exchanger 1905 for heating the reactants that are input to the hydrogen producing reactor 1906 and cooling the reformate that is output from the hydrogen producing reactor 1906.

The gas turbine system comprises a pipe 1907 that comprises the reformate that is output from the hydrogen producing reactor 1906. The temperature of the output reformate may be 550-600°C. The reformate may comprise about 90%vol to 95%vol hydrogen and small amounts, or traces, of any of $CH_4$, $CO_2$, CO and $H_2O$.

The gas turbine system comprises a compressor 1908 of the reformate arranged to pressurise it to the pressure of the combustor 1922 of the gas turbine. This may be approximately 20 bar.

The gas turbine system comprises a compressor 1909 that is arranged to compress air for use in the combustor 1922 of the gas turbine and also for use a combustor 1917 for the sorbent regeneration process. The compressor 1909 may be arranged to operate in a similar way to the compressor 1802 shown in Figure 18.

The gas turbine system comprises a pipe 1910 that comprises some of the compressed air that is output from the compressor 1909. The compressed air is for use in the combustor 1917 for the sorbent regeneration process.

The gas turbine system comprises a pump/compressor 1911 for compressing some of the carbonaceous gas that is received through the third input 1903.

The gas turbine system comprises a mixer 1912 that is arranged to mix the carbonaceous gas that is output from the pump/compressor 1911 with compressed air that is output from the compressor 1909.

The gas turbine system comprises a heat exchanger 1913 that is arranged to heat the reactants that are output from the mixer 1912 and cool carbon dioxide that is output from the sorbent regeneration process.

The gas turbine system comprises a sorbent regeneration reactor 1914 arranged to regenerate the sorbent. The sorbent regeneration reactor 1914 may be the reactor for regenerating the sorbent according to any of the above-described second to fifth examples.

The gas turbine system comprises a pipe 1915 that comprises carbon dioxide that is output from the sorbent regeneration reactor 1914. The temperature of output the carbon dioxide may be 800°C to 900°C.

The gas turbine system comprises an output 1916 of carbon dioxide. This may be used as an input to a steam turbine cycle or its heat may be used in other ways. The carbon dioxide may, for example, be input into a compression and liquefaction plant so that the carbon dioxide is not released into the atmosphere.

The gas turbine system comprises combustor 1917 for generating the heat required for regenerating the sorbent. The combustor 1917 may be the same combustor for generating the heat required for regenerating the sorbent according to any of the above-described second to fifth examples. Accordingly, the combustor 1917 may be a catalytic combustor and is preferably a total catalytic combustor, such as the total catalytic combustor described in WO 2018/162675.

The combustor 1917 may be integrated within the sorbent regeneration reactor 1914 or it may be separated from the sorbent regeneration reactor 1914 with the heat transferred from the combustor 1917 to the sorbent regeneration reactor 1914 by heat loops/heat exchangers, according to the techniques described in any of the above-described second to fifth examples. In the combustor 1917, carbonaceous gas is combusted in air at a temperature of about 900°C to 1000°C with the aid of a catalyst. The combustor 1917 may be operated at a pressure of 20 bar. Preferably, the combustor 1917 is operated at a pressure that is greater than 20 bar. Although the combustor 1917 is preferably a total combustor, traces of $O_2$ may remain in the exhaust gasses output from the combustor 1917.

The carbonaceous gas may alternatively be combusted in the combustor 1917 with flue gas in addition to, or instead of, air. Flue gas comprises oxygen and so combustion can occur without air being supplied. Advantageously, it is not necessary to supply pure oxygen to the combustor 1917.

The catalyst used in the combustion process in combustor 1917 preferably comprises one or more of nickel, cobalt, Ru, Rh, Pd and Pt. The catalyst is preferably a Ni-Co mixed oxide. The catalyst is preferably any of the catalysts as disclosed in the International patent application with publication number WO 2013/150271.

The gas turbine system comprises means for moving sorbent from the hydrogen producing reactor 1906 to the sorbent regeneration reactor 1914. This may be according to the techniques described in any of the above-described second to fifth examples.

The gas turbine system comprises means 1919 for moving sorbent from the sorbent regeneration reactor 1914 to the hydrogen producing reactor 1906. The means 1919 for moving sorbent may be according to the techniques as described in any of the above-described second to fifth examples. Accordingly, the means 1919 for moving sorbent may be a riser.

The gas turbine system comprises a pipe 1920 that comprises exhaust gas from the combustor 1917. The exhaust gas is a gas mixture that may comprise mostly nitrogen, $H_2O$ and carbon dioxide with trace amounts of methane and oxygen. Approximate concentrations of gasses in the exhaust gas may be 71%vol to 73%vol $N_2$, 17%vol to 19%vol $H_2O$, 8%vol to 9%vol $CO_2$, less than 1%vol $CH_4$ and less than 1%vol $O_2$.

The gas turbine system comprises a mixer 1921 that is arranged to receive hot pressurised gas that is output from the combustor 1917 and hot pressurised reformate from the compressor 1908. The mixer mixes the received gasses and outputs a gas mixture that is the fuel that is supplied to the combustor 1922 of the gas turbine. The gas mixture output from the mixer 1921 is a hydrogen comprising fuel according to embodiments.

Preferably, 30%vol to 55%vol of the gas mixture output from the mixer 1921 is hydrogen. More preferably, 40%vol to 50%vol of the fuel is hydrogen. Further preferably, approximately 40%vol of the fuel is hydrogen. It is preferable for the amount of hydrogen to be less than 50%vol of the fuel.

Preferably, most of the rest of the fuel is $N_2$. The fuel may also comprise a relatively small amount of $CO_2$. The fuel may also comprise a relatively small amount of $H_2O$. Small, or trace, amounts of any of $CH_4$, CO and $O_2$ may also be present in the fuel supplied to the combustor 1922.

The gas turbine system comprises a combustor 1922 of the gas turbine. The combustor may be similar to the combustor 1803 as described with reference to Figure 18.

The gas turbine system comprises a gas turbine 1924. The gas turbine 1924 may be similar to the gas turbine 1805 as described with reference to Figure 18.

The gas turbine system comprises air supply 1923. The air supply 1923 provides a slip stream of compressed air that can be used for cooling blades of the gas turbine 1924.

The gas turbine system comprises a generator 1925 of electrical power that is driven by a shaft of the gas turbine.

The gas turbine system comprises a output 126 of exhaust gas from the combustor 1922 of the gas turbine. This may be used as an input to a steam turbine cycle or its heat may be used in other ways. The exhaust gas will mostly comprise $N_2$ and $H_2O$.

Advantageously, embodiments allow a hydrogen based fuel to be used in a gas turbine.

The gas turbine is preferably part of a combined cycle power plant. The gas turbine is preferably part of a natural gas fired combined cycle power plant (NGCC).

The gas turbine is preferably integrated with a system for producing the hydrogen that is itself integrated with a carbon capture system. The release of $CO_2$ into the atmosphere is therefore greatly reduced from if natural gas is used as a fuel in a gas turbine.

Embodiments provide a system in which hydrogen fuel is intrinsically mixed with $CO_2$. The $CO_2$ has a higher damping effect on the reactivity and combustion properties of hydrogen than steam or nitrogen.

Embodiments do not require the use of syngas and this avoids the problems caused by high concentrations of CO. Embodiments also do not require the expense and complications resulting from providing equipment for depleting the concentration of $O_2$ in the air that is used in a combustor.

Embodiments may include the above-described first to fifth examples.

Embodiments, and the examples that embodiments may include, include a number of modifications and variations to the above-described techniques.

In particular, embodiments include other techniques for integrating a hydrogen production system with a gas turbine, with the fuel for the gas turbine comprising the produced hydrogen. Embodiments do not require all of the components of the system as shown in Figure 19. For example, embodiments include implementations of the gas turbine system that do not include one, or both, of the heat exchangers 1905 and 1913. Separate heating and cooling systems may instead be provided or no heating and cooling of the gasses may occur at one, or both, of these stages.

Embodiments also include additional components being provided in the system from those shown in Figure 19. For example, embodiments include the hydrogen comprising gas mixture that is output from the hydrogen producing reactor 1906 and/or the exhaust gas that is output from the combustor 1917 being passed through a heat exchanger, cooler, or other equipment, to reduce, or remove, the amount of $H_20$ in the gas mixture before it is supplied to the combustor 1922.

Embodiments may also include a system for controlling the relative amounts of the gasses in the fuel. For example, the concentration of hydrogen in the reformate may be measured and the amount of exhaust that is mixed with the reformate controlled so as to provide a desired concentration of hydrogen in the fuel. The fuel and air supplies to the combustor 1922 of the gas turbine may be controlled so that the amount of oxygen in the air is at least half that of the amount of hydrogen in the fuel. Preferably, the fuel and air supplies to the combustor 1922 of the gas turbine are controlled so that the amount of oxygen is substantially more than half that of the amount of hydrogen in the fuel. Using excess air in the combustor 1922 reduces the flame temperature.

Embodiments also include controlling the supply of hydrogen comprising gas that is output from the hydrogen producing reactor 1906 so that some of the hydrogen is used to generate fuel for use by a gas turbine, as described with reference to Figure 19, and some the hydrogen is stored or used for another application. The amount of fuel supplied to the gas turbine can thereby be controlled by controlling the proportion of the generated hydrogen that is supplied to the gas turbine. This would allow the hydrogen producing reactor 1906 to continue operating if the gas turbine was not operational (e.g. it was being serviced) or if, for example, the amount of fuel supplied to the gas turbine was controlled in dependence on the demand for electrical power produced by the generator 1925.

Embodiments include supplying flue gas to the combustor 1922 of the gas turbine instead of, or in addition to, the supply of air.

Examples are not restricted to the use of a solid sorbent and the solid used in the first and second reactors according to examples may be any type of solid reactant.

Examples are not restricted to the use of reactor designs as specifically shown in the figures and the reactor designs according to examples may be any type of mass transfer system.

The openings in the sidewalls of each moving bed are all preferably less than 500$\mu$m, more preferably less than 400$\mu$m and further preferably less than 200$\mu$m.

The first and second reactors according to examples can be made with a wide range of dimensions depending on the application.

The walls of lower bed 9 of the first reactor may be sloped at an angle between about 60 and 70 degrees in order to facilitate the movement of sorbent out of the first reactor due to gravity.

Examples include the lower bed 9 of the first reactor comprising one or more space consuming structures that may be hollow. These assist the movement of the sorbent out of the first reactor.

The baffle plates are preferably substantially rigid so that they help to strengthen the structure of the first and second reactors, in particular the walls of the moving beds 7, 901.

In the second to fifth examples, the combustor 1001 that provides heat for the sorbent regeneration process is not restricted to being external from the second reactor 809 and examples include the combustor 1001 being integrated in the second reactor 809. The heat source for the sorbent regeneration is preferably a catalytic combustor, and more preferably a catalytic total combustor. The heat source may be provided by any known technique in sorbent regeneration processes. In particular, the heat source may comprise the combustion of a carbonaceous fuel in the presence of air and/or pure oxygen. The heat source for the sorbent regeneration may be, for example, a gas stream, such as a flue gas stream, from another process, and/or excess heat from a furnace, such as in the metal production industry.

In the second to fourth examples, heat is transferred between the first and third regions of the second reactor 809 by heat loops 1003. Examples include the first and third regions of the second reactor 809 alternatively having independent respective heating and cooling systems and the first and third regions not being connected to each other by heat loops.

In the second to fifth examples, the supplied gas to the second reactor 809 through the gas inlet(s) 903 of the second reactor 809 is not restricted to being the same gas as the gas that is released during the regeneration of the sorbent and examples include the supplied gas to the second reactor 809 being a different gas as the gas released by the sorbent.

In at least the fourth example, some of the gas in the carbonation region 1204 may be used as the circulated gas by the first gas circulation system. There may be no gas barrier 1309 and no gas input(s) 1303. Gas from the gas output(s) 1304 is supplied to the cooling region 1203. Gas output(s) 1306 from the cooling region may supply gas to a gas stream comprising the main flow of gas out of the system through the gas outlet 1205.

It will be understood that the implementation of examples may comprise a number of standard components that are not explicitly described herein. For example, the system may comprise one more fans and valves for controlling the flows of gas and sorbent around the system.

The first and second reactors both comprise gas ducts with chambers in the gas ducts separated by baffles. The number of baffles, and consequent number of chambers, in the gas ducts of each reactor may be different. The spacing between the baffles in each reactor may or may not be constant. In particular, the baffles may have a variable vertical spacing between each other. The length of the gas chambers may therefore increase, or decrease, along the vertical length of the reactor.

Throughout examples the use of moving beds is described. The moving beds according to examples are generally mass transfer regions.

Examples have been described with reference to a solid sorbent based on CaO. However, examples include the first and second reactors being used with other types of solid sorbent for use in CCS.

Examples include the first and second reactors being used in other applications than CCS. In particular, the sorbent may, for example, be a sorbent of $SO_2$ or other gasses.

Although examples have been presented with the gas to be cleaned being flue gas, examples may be used with any gas and are not restricted to being a flue gas from a combustion process. The gas to be cleaned may be referred to as a dirty gas. The dirty gas may be sour gas directly output from a well head. The sour gas would be cleaned by capturing the hydrogen sulphide content.

Examples also include cleaning gasses (by removing $CO_2$ and/or other gasses) in industries such as the power generation industry, the metal production industry, cement production industry and mineral processing industry. In particular, examples can be used to clean gasses from cement production processes, blast furnace processes, steel production processes and reforming processes for hydrogen production.

Examples are appropriate for industrial scale processes. In particular, examples are particularly appropriate for providing a gas capture system that captures carbon dioxide gas generated by a power station/plant. This includes all types of power plant that generate carbon dioxide gas, such as power plants that generate power by combusting a carbonaceous fuel. The gas capture system according to examples is arranged to receive flue gas output from the power plant and remove carbon dioxide from the flue gas. The power plant may be a natural gas combined cycle plant. A heat exchanger may be used to pre-heat air used in the power plant using heat generated in gas capture system.

All of the components of the gas capture system of examples are scalable such that the gas capture system is suitable for both capturing gas from the power stations that are the largest generators of carbon dioxide gas as well a power stations that are relatively small generators of carbon dioxide gas.

The flow charts and descriptions thereof herein should not be understood to prescribe a fixed order of performing the method steps described therein. Rather, the method steps may be performed in any order that is practicable. Although the present invention has been described in connection with specific exemplary examples, it should be understood that various changes, substitutions, and alterations apparent to those skilled in the art can be made to the disclosed examples without departing from the scope of the invention as set forth in the appended claims.

## Claims

1. A method of generating fuel for use in a combustor (1922) of a gas turbine, the method comprising:

   generating reformate using heat from a total combustor (1917), wherein the reformate comprises hydrogen; and
   generating a fuel, that is a gas mixture, by mixing at least part of the reformate with at least part of the exhaust gas from the total combustor.

2. A gas turbine system comprising:

   a gas turbine comprising a first combustor (1922) configured to receive a fuel that is a gas mixture that comprises hydrogen and an exhaust gas;
   a hydrogen producing system;
   a second combustor (1917), wherein the second combustor (1917) is a total combustor and the second combustor (1917) is separate from the first combustor (1922); and
   an air intake configured to receive air;
   wherein:

      the hydrogen producing system is configured to perform a reforming process on a carbonaceous gas, wherein the reforming process generates a reformate that comprises hydrogen;
      the total combustor (1917) is configured to generate heat and an exhaust gas; and
      the first combustor (1922) of the gas turbine is configured to receive reformate output from the hydrogen producing system, exhaust gas from the total combustor, and air from the air intake.

3. The gas turbine system according to claim 2, wherein the hydrogen producing system comprises an arrangement configured to capture, by a sorbent, carbon dioxide generated by the reforming process; and
   the gas turbine system is configured so that at least some of the heat generated by the total combustor (1917) is used to regenerate sorbent that has captured carbon dioxide in the hydrogen producing system.

4. The gas turbine system according to claim 2 or 3, wherein 30%vol to 55%vol of the fuel is hydrogen, preferably 40%vol to 50%vol of the fuel is hydrogen, and more preferably 40%vol of the fuel is hydrogen.

5. The method according to claim 1, wherein the method is performed by a system according to any of claims 2 to 4.

## Patentansprüche

1. Verfahren zur Erzeugung von Brennstoff zur Verwendung in einer Brennkammer (1922) einer Gasturbine, wobei das Verfahren umfasst:

Erzeugen von Reformat unter Verwendung von Wärme aus einer Gesamtbrennkammer (1917), wobei das Reformat Wasserstoff enthält; und
Erzeugen eines Brennstoffs, der ein Gasgemisch ist, durch Mischen von mindestens einem Teil des Reformats mit mindestens einem Teil des Abgases aus der Gesamtbrennkammer.

**2.** Gasturbinensystem, das umfasst:

eine Gasturbine, die eine erste Brennkammer (1922) umfasst, die so konfiguriert ist, dass sie einen Brennstoff aufnimmt, der ein Gasgemisch ist, das Wasserstoff und ein Abgas umfasst;
ein Wasserstofferzeugungssystem,
eine zweite Brennkammer (1917), wobei die zweite Brennkammer (1917) eine Gesamtbrennkammer ist und die zweite Brennkammer (1917) von der ersten Brennkammer (1922) getrennt ist; und
einen Lufteinlass, der zur Aufnahme von Luft konfiguriert ist;
wobei:

das Wasserstofferzeugungssystem dafür konfiguriert ist, einen Reformierungsprozess an einem kohlenstoffhaltigen Gas durchzuführen, wobei der Reformierungsprozess ein Reformat erzeugt, das Wasserstoff enthält;
die Gesamtbrennkammer (1917) so konfiguriert ist, dass sie Wärme und ein Abgas erzeugt; und
die erste Brennkammer (1922) der Gasturbine so konfiguriert ist, dass sie den Reformatausstoß aus dem Wasserstofferzeugungssystem, Abgas aus der Gesamtbrennkammer und Luft aus dem Lufteinlass empfängt.

**3.** Gasturbinenanlage nach Anspruch 2, wobei das Wasserstofferzeugungssystem eine Anordnung umfasst, die so konfiguriert ist, dass sie durch den Reformierungsprozess erzeugtes Kohlendioxid durch ein Sorptionsmittel abfängt; und
das Gasturbinensystem so konfiguriert ist, dass zumindest ein Teil der von der Gesamtbrennkammer (1917) erzeugten Wärme verwendet wird, um das Sorptionsmittel zu regenerieren, das das Kohlendioxid in dem Wasserstofferzeugungssystem eingefangen hat.

**4.** Gasturbinenanlage nach Anspruch 2 oder 3, wobei 30 Vol.-% bis 55 Vol.-% des Brennstoffs Wasserstoff sind, vorzugsweise 40 Vol.-% bis 50 Vol.-% des Brennstoffs Wasserstoff sind und noch bevorzugter 40 Vol.-% des Brennstoffs Wasserstoff sind.

**5.** Verfahren nach Anspruch 1, wobei das Verfahren durch ein System nach einem der Ansprüche 2 bis 4 durchgeführt wird.

## Revendications

**1.** Procédé de génération de combustible destiné à être utilisé dans une chambre de combustion (1922) d'une turbine à gaz, le procédé comprenant :

la génération d'un reformat à l'aide de la chaleur provenant d'une chambre de combustion (1917) totale, dans lequel le reformat comprend de l'hydrogène ; et
la génération d'un combustible, qui est un mélange gazeux, en mélangeant au moins une partie du reformat avec au moins une partie du gaz d'échappement provenant de la chambre de combustion totale.

**2.** Système de turbine à gaz comprenant :

une turbine à gaz comprenant une première chambre de combustion (1922) configurée pour recevoir un combustible qui est un mélange gazeux comprenant de l'hydrogène et un gaz d'échappement ;
un système de production d'hydrogène ;
une deuxième chambre de combustion (1917), dans lequel la deuxième chambre de combustion (1917) est une chambre de combustion totale et la deuxième chambre de combustion (1917) est séparée de la première chambre de combustion (1922) ; et
une admission d'air configurée pour recevoir de l'air ;
dans lequel :

le système de production d'hydrogène est configuré pour réaliser un processus de reformage sur un gaz carboné, dans lequel le processus de reformage génère un reformat qui comprend de l'hydrogène ;
la chambre de combustion (1917) totale est configurée pour générer de la chaleur et un gaz d'échappement ; et
la première chambre de combustion (1922) de la turbine à gaz est configurée pour recevoir la sortie de reformat provenant du système de production d'hydrogène, le gaz d'échappement provenant de la chambre de combustion totale, et l'air provenant de l'admission d'air.

**3.** Système de turbine à gaz selon la revendication 2, dans lequel le système de production d'hydrogène comprend un agencement configuré pour capturer, à l'aide d'un sorbant, le dioxyde de carbone généré par le processus de reformage ; et
le système de turbine à gaz est configuré de sorte qu'au moins une partie de la chaleur générée par la chambre de combustion (1917) totale est utilisée pour régénérer un sorbant qui a capturé le dioxyde de carbone dans le système de production d'hydrogène.

**4.** Système de turbine à gaz selon la revendication 2 ou 3, dans lequel 30 % en volume à 55 % en volume du combustible est de l'hydrogène, de préférence 40 % en volume à 50 % en volume du combustible est de l'hydrogène, et plus préférablement 40 % en volume du combustible est de l'hydrogène.

**5.** Procédé selon la revendication 1, dans lequel le procédé est réalisé par un système selon l'une quelconque des revendications 2 à 4.

Fig. 1

5
1
7
2
3
4
8
10

Fig. 2

5
6
7
8
9
10

Fig. 3

311
311
312
312

Fig. 4

12
12
12
12
12

Fig. 5

12
13
15
14
16

Fig. 6

17
u_MB
18
2
4
19
h
u_CF
u_FG
19
7
20

Fig. 7A

Solids Inlet
A
5
13
Cooling Loop
Gas Outlet
Gas Inlet
14
10
A
Solids Outlet

Fig. 7B

Fig. 7C
Gas Outlet
B
B
Gas Inlet
C
SECTION A-A

Fig. 7D
Moving Bed
Wedge wire
SECTION B-B
Wedge wire
Fig. 7E
Wedge wire
SECTION D-D

Fig. 7F
Loop seals
D
D
DETAIL C

Fig. 8

818
Clean
Flue
Gas
803
801
Flue
Gas
821
CH4
809
CO2

Fig. 9
803
821
902
903
903
Region 1
901
901
Region 2
809
901
Region 3
901
904
904
905
905
905
905

Fig. 10

VFD
ΔPT
1004
PT
Region 1
Region 2
VFD
Region 3
1003
1003
1005
1002
1001

Fig. 11A

Fig. 11B

Fig. 11C

Fig. 11D

Fig. 12

1205
1204
1206
821
1207
1202
1002
1001
1209
1201
1203
1208
1003

Fig. 13

1205
1205
1204
1206
1206
821
1309
1303
1303
1202
1304
1304
1301
1307
1307
1201
1308
1308
1302
1305
1305
1203
1306
1306
905
905
905
905

Fig. 14
1205
1402
1204
1206
1401
1207
1202
1301
1209
1201
1208
1203
1003
1302
1001
1002

Fig. 15
821
1504
1501
1505
1502
1508
1503
1506
1202
1301
1208
1201
1209
1302
1507
1002
1203
905
1003
1001
905
905
905

Fig. 16
821
1504
1501
1505
1502
1508
1506
1503
1202
1208
1301
1201
1209
1302
1002
1203
1001
1507
1003

Fig. 17
821
1501
1502
1503
1202
1301
1201
1302
1203
905
905
905
905

Fig. 18

1801
1804
1803
1806
1802
1805
1807

Fig. 19
1901
1902
1903
1904
1905
1906
1907
1908
1909
1910
1911
1912
1913
1914
1915
1916
1917
1918
1919
1920
1921
1922
1923
1924
1925
1926
1927

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102009043499 A1
- US 2008155984 A1
- WO 2018162675 A
- EP 2006003507 W
- EP 2018055828 W
- WO 2013150271 A